(19) Europäisches Patentamt
European Patent Office
Office européen des brevets

(11) EP 1 131 384 B1

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(21) Anmeldenummer: **99955879.4**

(22) Anmeldetag: **25.10.1999**

(51) Int Cl.[7]: **C09D 201/00**, C08G 83/00, C08G 18/08, C08G 18/62

(86) Internationale Anmeldenummer:
**PCT/EP1999/008063**

(87) Internationale Veröffentlichungsnummer:
**WO 2000/026312 (11.05.2000 Gazette 2000/19)**

(54) **FLÜSSIGE STOFFGEMISCHE UND (CO)POLYMERISATE, VERFAHREN ZU IHRER HERSTELLUNG UND IHRE VERWENDUNG ZUR HERSTELLUNG VON REAKTIVEN MEHRSTOFFMISCHUNGEN**

LIQUID SUBSTANCE MIXTURES AND (CO)-POLYMERS, METHOD FOR THEIR PRODUCTION AND USE THEREOF FOR PRODUCING COMPLEX REACTIVE MIXTURES

MELANGES DE SUBSTANCES LIQUIDES ET (CO)POLYMERES, LEUR PROCEDE DE PRODUCTION ET LEUR UTILISATION POUR LA PRODUCTION DE MELANGES REACTIFS A PLUSIEURS SUBSTANCES

(84) Benannte Vertragsstaaten:
**DE ES FR IT**

(30) Priorität: **31.10.1998 DE 19850243**

(43) Veröffentlichungstag der Anmeldung:
**12.09.2001 Patentblatt 2001/37**

(73) Patentinhaber: **BASF Coatings Aktiengesellschaft**
**48165 Münster (DE)**

(72) Erfinder:
- **RINK, Heinz-Peter**
  **D-48153 Münster (DE)**
- **JUNG, Werner, Alfons**
  **D-59387 Ascheberg (DE)**

(74) Vertreter: **Fitzner, Uwe, Dr.**
**Dres. Fitzner & Münch**
**Rechts- und Patentanwälte**
**Lintorfer Strasse 10**
**40878 Ratingen (DE)**

(56) Entgegenhaltungen:
**EP-A- 0 026 875**
**EP-A- 0 863 170**
**WO-A-93/17060**
**WO-A-96/07688**
**WO-A-97/46627**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 131 384 B1

## Beschreibung

Die vorliegende Erfindung betrifft neue flüssige Stoffgemische und (Co)Polymerisate sowie neue Verfahren zu ihrer Herstellung. Außerdem betrifft die vorliegende Erfindung die Verwendung der neuen flüssigen Stoffgemische und (Co)Polymerisate zur Herstellung neuer reaktiver Mehrstoffmischungen, insbesondere Beschichtungsmittel, Klebstoffe und Dichtungsmassen.

Die heute bekannten Mehrstoffmischungen, insbesondere Beschichtungsmittel, wie Klar- oder Decklacke, Füller, Grundierungen oder Mittel für den Unterbodenschutz von Kraftfahrzeugen, Klebstoffe oder Dichtungsmassen basieren auf Bindemitteln, die eine große Anzahl unterschiedlicher Eigenschaften aufweisen müssen, damit die benötigten Beschichtungs-, Kleb- oder Dichtungseigenschaften erzielt werden können. Solche Mehrstoffmischungen, insbesondere Lacksysteme, sind beispielsweise aus den deutschen Patentschriften DE-A-44 07 415, DE-A-44 07 409 oder DE-A-43 10 414 bekannt. Der Nachteil all dieser Mehrstoffmischungen ist, daß die Festkörpergehalte nicht unbegrenzt erhöht werden können. Eine Reduktion der Lösemittelemission ist somit bei diesen Systemen nur in engen Grenzen möglich.

Dem kann bis zu einem gewissen Grade durch die Verwendung von Reaktiverdünnern abgeholfen werden. Bei dem Reaktiverdünner handelt sich um ein reaktives Verdünnungsmittel oder Lösemittel, welches gemäß der Definition nach DIN 55945: 1996-09 bei der Filmbildung durch chemische Reaktion Bestandteil des Bindemittels wird. Bei der Verwendung üblicher und bekannter Reaktiverdünner beispielsweise in Lacksystemen können jedoch Probleme auftreten, wie die Anlösung weiterer Lackschichten bei der Applikation oder die Erniedrigung der Thermostabilität und der Lichtstabilität. Außerdem stellt die Zugabe von Reaktiverdünnern zu den Lacksystemen einen zusätzlichen Verfahrensschritt dar, was im Hinblick auf die Verfahrensökonomie grundsätzlich von Nachteil ist.

Die Zugabe von Reaktiverdünnem zu den üblichen und bekannten Mehrstoffmischungen kann außerdem nicht das Problem beheben, daß für die Herstellung der Bindemittel nach wie vor Lösemittel verwendet werden müssen, welche dann den Gesamtlösemittelgehalt der reaktiven Mehrstoffmischungen festlegen. Zwar ist es in einigen Fällen möglich, die Bindemittel durch Polymerisation in Masse, d. h. ohne Lösemittel, herzustellen, indes ergeben sich dann Probleme bei der Vermischung mit den übrigen Bestandteilen der reaktiven Mehrstoffmischungen, so daß letztlich doch wieder zu Lösemitteln gegriffen werden muß.

Aufgabe der vorliegenden Erfindung ist es, neue flüssige Stoffgemische sowie neue (Co)Polymerisate bereitzustellen, welche die Nachteile des Standes der Technik nicht mehr aufweisen, sondern es gestatten, ohne zusätzliche Verfahrensschritte reaktive Mehrstoffmischungen herzustellen, welche praktisch lösemittelfrei sind. Außerdem ist es die Aufgabe der vorliegenden Erfindung, neue Mehrstoffmischungen, insbesondere neue Beschichtungsmittel, Klebstoffe und Dichtungsmassen, bereitzustellen, welches sich in besonders einfacher Weise herstellen und verarbeiten lassen. Nicht zuletzt ist es die Aufgabe der vorliegenden Erfindung, ein neues Verfahren zur (Co)Polymerisation olefinisch ungesättigter Verbindungen vorzuschlagen.

Demgemäß wurden die neuen flüssigen Stoffgemische und die neuen (Co)Polymerisate gefunden, welche erhältlich sind, indem man olefinisch ungesättigte Verbindungen in Reaktiverdünnem für thermisch härtbare reaktive Mehrstoffmischungen als Reaktionsmedium (co)polymerisiert, wobei als Reaktiv- verdümer die im Anspruch 1 deficierten Verbindungen eingesetzt werden.

In Hinblick auf den Stand der Technik war es überraschend und für den Fachmann nicht vorhersehbar, daß die der vorliegenden Erfindung zugrundeliegende Aufgabe mit Hilfe der neuen flüssigen Stoffgemische und der neuen (Co)Polymerisate gelöst werden konnte. Insbesondere stand es nicht zu erwarten, daß die Herstellung von reaktiven Mehrstoffmischungenen durch die neuen flüssigen Stoffgemische und neuen (Co)Polymerisate erheblich vereinfacht wird.

Im folgenden werden die neuen flüssigen Stoffgemische als "erfindungsgemäße Stoffgemische" und die neuen (Co)Polymerisate als "erfindungsgemäße (Co)Polymerisate" bezeichnet.

In entsprechender Weise werden die neuen reaktiven Mehrstoffmischungen als "erfindungsgemäß Mehrstoffmischungen" bezeichnet.

Die erfindungsgemäßen Stoffgemische und (Co)Polymerisate sind erhältlich durch (Co)Polymerisation olefinisch ungesättigter Verbindungen.

Als olefinisch ungesättigte Verbindungen kommen alle mono- und höherfunktionellen Monomere in Betracht, wie sie auf dem Gebiet der Kunststoffe üblich und bekannt sind. Erfindungsgemäß ist es von Vorteil, monofunktionelle Monomere zu verwenden, um eine unerwünschte Vernetzung oder Gelierung der (Co)Polymerisate bei der Herstellung zu verhindern. In vielen Fällen kann es indes von Vorteil sein, höherfunktionelle Monomere in untergeordneten Mengen mit zu verwenden.

Beispiele geeigneter erfindungsgemäß zu verwendender Monomere sind

A1) Olefine wie Ethylen, Propylen, But-1-en, Pent-1-en, Hex-1-en, Cyclohexen, Cyclopenten, Norbonen, Butadien, Isopren, Cylopentadien oder Dicyclopentadien,

A2) im wesentlichen säuregruppen- und hydroxylgruppenfreie Ester der (Meth)Acrylsäure wie
(Meth)Acrylsäurealkyl- oder cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; oder cycloaliphatische (Meth)acryl-säureester, insbesondere Cyclohexyl-, Isobomyl-, Dicyclopentadienyl-, Octahydro-4,7-methano-1H-inden-methanol- oder tert.- Butylcyclohexyl(meth)acrylat;
(Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate;
Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; oder
Trimethylolpropan-di- oder -tri(meth)acrylat oder Pentaerythrit-di-, -tri- oder -tetra(meth)acrylat;

A3) (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- oder N,N-Cyclohexyl-methyl-(meth)acrylsäureamid;

A4) Monomere, die mindestens eine Hydroxylgruppe pro Molekül tragen und im wesentlichen säuregruppenfrei sind wie
Hydroxyalkylester der Acrylsäure, Methacrylsäure oder einer anderen alpha,beta-ethylenisch ungesättigten Carbonsäure, welche sich von einem Alkylenglykol ableiten, das mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Octahydro-4,7-methano-1H-inden-dimethanol- oder Methylpropandiolmonoacrylat, -monomethacrylat, -monoethacrylat,-monocrotonat, -monomaleinat, -monofumarat oder -monoitaconat; oder Umsetzungsprodukte aus cyclischen Estern, wie z.B. epsilon-Caprolacton und diesen Hydroxyalkylestern;
olefinisch ungesättigte Alkohole wie Allylalkohol oder Polyole wie Trimethylolpropanmono- oder diallylether oder Pentaerythritmono-, -di- oder -triallylether;

A5) mindestens eine Säuregruppe, vorzugsweise eine Carboxyl- Sulfon- oder Phosphonsäuregruppe, pro Molekül tragendes Monomer, insbesondere Acrylsäure, Methacrylsäure, Ethacrylsäure, Crotonsäure, Maleinsäure, Fumarsäure, Itaconsäure, Maleinsäuremono(meth)acryloyloxyethylester, Bernsteinsäuremono(meth)acryloyloxyethylester oder Phthalsäuremono(meth)acryloyloxyethylester;

A6) Epoxidgruppen enthaltende Monomere wie der Glycidylester der Acrylsäure, Methacrylsäure, Ethacrylsäure, Crotonsäure, Maleinsäure, Fumarsäure oder Itaconsäure;

A7) vinylaromatische Kohlenwasserstoffe, wie Styrol, alpha-Alkylstyrole, insbesondere alpha-Methylstyrol, oder Vinyltoluol;

A8) Nitrile wie Acrylnitril oder Methacrylnitril;

A9) Umsetzungsprodukte der vorstehend beschriebenen Monomere (A5) mit dem Glycidylester einer in alpha-Stellung verzweigten Monocarbonsäure mit 5 bis 18 C-Atomen je Molekül, insbesondere das Umsetzungsprodukt von Acryl- und/oder Methacrylsäure mit dem Glycidylester der Versaticsäure;

A10) Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether oder Vinylcyclohexylether, Vinylester wie Vinylacetat, Vinylpropionat, Vinylbutyrat, Vinylpivalat oder der Vinylester der 2-Methyl-2-ethylheptansäure oder Vinylester von in alpha-Stellung verzweigten Monocarbonsäuren mit 5 bis 18 C-Atomen im Molekül, die erhalten werden durch Umsetzung von Ameisensäure oder Kohlenmonoxid und Wasser in Anwesenheit eines flüssigen, stark sauren Katalysators mit Propylentrimer, Propylentetramer oder Diisobutylen oder mit Olefinen, die Crack-Produkte von paraffinischen Kohlenwasserstoffen wie Mineralölfraktionen sind und sowohl verzweigte oder geradkettige acyclische und/oder cycloaliphatische Olefine enthalten;

A11) Polysiloxanmakromonomere, die ein zahlenmittleres Molekulargewicht Mn von 1.000 bis 40.000, bevorzugt

von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure;

Erfindungsgemäß können demnach die Monomeren derart ausgewählt werden, daß bei der (Co)Polymerisation beliebige Polymerisate und Copolymerisate resultieren, wie etwa Polyolefine, Polystyrole, Polybutadiene, Polyisoprene, Polyvinylchloride, Polyacrylnitrile, Polyvinylacetate oder Polyacrylate.

Erfindungsgemäß von Vorteil ist es indes, die Monomere derart auszuwählen, daß bei der (Co)Polymerisation Bindemittel für thermisch härtbare reaktive Mehrstoffmischungen resultieren. Im Rahmen der vorliegenden Erfindung bedeuten thermisch härtbare reaktive Mehrstoffmischungen Beschichtungsmittel, Klebstoffe oder Dichtungsmassen, welche außer dem oder den Bindemittel(n) noch mindestens ein Vernetzungsmittel enthalten, welches mit den Bindemitteln beim Erhitzen ein dreidimensionales duroplastisches Netzwerk aufbaut.

Solche Vernetzungsreaktionen sind auf den Gebieten der Beschichtungsmittel, Klebstoffe und Dichtungsmassen üblich und bekannt und werden beispielsweise in dem Artikel von M. Ooka und H. Ozawa, "Recent developments in crosslinking technology for coating resins", in Progress in Organic Coatings, Band 23, 325 bis 338, 1994 beschrieben. Von den zahlreichen bekannten Vemetzungsreaktionen werden Vernetzungsreaktionen

- zwischen Hydroxylgruppen und funktionellen Gruppen, welche mit Hydroxylgruppen reagieren können, und
- zwischen Epoxidgruppen und Carboxylgruppen

bevorzugt.

Demnach werden Monomere mit verwendet, welche reaktive funktionelle Gruppen tragen, die mit den Vernetzungsmitteln Vernetzungsreaktionen eingehen können. Beispiele geeigneter Monomere dieser Art sind die Monomeren (A4), insbesondere die hydroxylgruppenhaltigen Alkylester der Acrylsäure und/oder Methacrylsäure, (A5), insbesondere Acrylsäure und/oder Methacrylsäure, oder (A6), insbesondere der Glycidylester der Acrylsäure und/oder Methacrylsäure.

Erfindungsgemäß ist es von besonderen Vorteil, die Monomere derart auszuwählen, daß hydroxylgruppenhaltige Polyacrylate resultieren, welche untergeordnete Mengen an Monomeren (A1), (A3) und/oder (A7) bis (A11) einpolymerisiert enthalten. Hierbei ist über den Begriff "untergeordnete Menge" ein Anteil an Monomeren zu verstehen, welcher das durch die Acrylatmonomeren hervorgerufene vorteilhafte Eigenschaftsprofil nicht nachteilig beeinflußt, sondern in vorteilhafter Weise variiert.

Erfindungsgemäß ist es von ganz besonderem Vorteil, die Monomeren derart auszuwählen, daß hydroxylgruppenhaltige Polyacrylate resultieren, die eine OHZ von 40 bis 240, vorzugsweise 60 bis 210, Säurezahlen von 0 bis 80, bevorzugt 0 bis 50, ganz besonders bevorzugt 3,9 bis 15,5, Glasübergangstemperaturen von-35 bis +70 °C, bevorzugt -20 bis +40 °C, und zahlenmittlere Molekulargewichte von 1500 bis 30000, bevorzugt 1500 bis 15000, ganz besonders bevorzugt 1500 bis 5000 aufweisen.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$1/Tg = \sum_{n=1}^{n=x} Wn/Tg_n; \qquad \sum_n W_n = 1$$

Tg = Glasübergangstemperatur des Polyacrylatharzes

$W_n$ = Gewichtsanteil des n-ten Monomers

$Tg_n$ = Glasübergangstemperatur des Homopolymers aus dem n-ten Monomer

x = Anzahl der verschiedenen Monomeren

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Für die vorliegende Erfindung ist es wesentlich, daß die vorstehend beschriebenen Monomeren in mindestens einem Reaktiverdünner für thermisch härtbare reaktive Mehrstoffmischungen (co)polymerisiert werden.

Erfindungsgemäß kommen alle Reaktiverdünner als Reaktionsmedium in Betracht, welche bei den bekannten Vernetzungsreaktionen, die in den entsprechenden erfindungsgemäßen Mehrstoffmischungen ablaufen, in das Bindemittel eingebaut werden und welche die Homo- oder Copolymerisation der Monomeren nicht be- oder gar verhindern. Der Fachmann kann daher die jeweils geeigneten Reaktiverdünner mit Hilfe seines allgemeinen Fachwissens, gegebenenfalls unter Zuhilfenahme einfacher Vorversuche, auswählen.

Erfindungsgemäß sind diejenigen Reaktiverdünner von Vorteil, welche an der Vernetzung

- hydroxylgruppenhaltiger Verbindungen mit Verbindungen, welche gegenüber Hydroxylgruppen reaktive funktionelle Gruppen tragen, oder

- epoxidgruppenhaltiger Verbindungen mit carboxylgruppenhaltigen Verbindungen

teilnehmen.

Demgemäß enthalten die erfindungsgemäß besonders bevorzugten Reaktiverdünner Hydroxylgruppen oder Epoxidgruppen.

Beispiele erfindungsgemäß besonders bevorzugter Reaktiverdünner sind hyperverzweigte Verbindungen mit einer tetrafunktionellen Zentralgruppe, abgeleitet von Ditrimethylolpropan, Diglycerin und/oder Ditrimethylolethan, oder einer tetrafunktionellen Zentralgruppe der allgemeinen Formel I,

$$C\ [-A_q\text{-}X\text{-}]_m\ [-A_r\text{-}X\text{-}]_n\ [-A_s\text{-}X\text{-}]_o\ [-A_t\text{-}X\text{-}]_p \qquad (I),$$

worin die Indices und die Variablen die folgende Bedeutung haben:

$m + n + o + p = 4$; mit
$m$ = eine ganze Zahl von 1 bis 3 und
$n$, $o$ und $p$ = 0 oder eine ganze Zahl von 1 bis 3;
$q$, $r$, $s$ und $t$ = eine ganze Zahl von 1 bis 5, wobei $q \geq r, s, t$, insbesondere $q > r, s, t$;
X = -O-, -S- oder -NH-;
A = $-CR_2-$; mit

R = -H, -F, -Cl, -Br, -CN, $-NO_2$, $C_1$-$C_3$-Alkyl- oder-Haloalkyl- oder $C_1$-$C_3$-Alkoxirest oder - für q, r, s und/oder t = mindestens 2 - R = ein $C_2$-$C_4$-Alkandiylund/oder -Oxaalkandiylrest, welcher 2 bis 5 Kohlenstoffatome und/ oder ein Sauerstoffatom -O-, welches 3 bis 5 Kohlenstoffatome des Restes -A- überbrückt, aufweist.

Unter dem Begriff "abgeleitet" ist hierbei die gedankliche Abstraktion der Wasserstoffatome von den Hydroxylgruppen der Tetrole zu verstehen.

Erfindungsgemäß sind die Zentralgruppen I von Vorteil und werden deshalb besonders bevorzugt verwendet.

In der allgemeinen Formel I bezeichnen die Indizes q, r, s und t ganze Zahlen von 1 bis 5. Hierbei kann der Index q gleich den Indizes r, s und t sein. Unter dieser Rahmenbedingung resultieren symmetrische Zentralgruppen I.

Beispiele geeigneter erfindungsgemäß zu verwendender symmetrischer Zentralgruppen I leiten sich ab von symmetrischen Tetrolen wie Pentaerythrit, Tetrakis(2-hydroxyethyl)methan oder Tetrakis(3-hydroxypropyl)methan.

Erfindungsgemäß sind Zentralgruppen I, worin der Index q größer als die Indizes r, s und t ist und daher einen Wert von mindestens 2 hat, von Vorteil und werden deshalb ganz besonders bevorzugt verwendet. Unter dieser Rahmenbedingung resultieren asymmetrische Zentralgruppen I.

In der allgemeinen Formel I addieren sich dann die Indizes m, n, o und p auf 4. Der Index m ist stets größer als 0 und steht für eine ganze Zahl von 1 bis 3, insbesondere für 1.

Die Indizes n, o und p haben unter Beachtung der vorstehenden Randbedingung den Wert 0 oder stehen für eine ganze Zahl von 1 bis 3. Dies bedeutet, daß nicht jeder dieser Indizes den Wert 0 annehmen kann.

Erfindungsgemäß sind folgende Wertekombinationen der Indizes von Vorteil:

m = 1 und n, o, p = 1;
m = 1, n = 2, o, p = 1;
m = 1, n = 2, o = 1 und p = 0;
m = 1, n = 3, o, p = 0;
m = 2, n = 1, o = 1 und p = 0;
m = 2, n = 2 und o, p = 0;
m = 3, n = 1 und o, p = 0.

Von diesen sind die Zahlenkombinationen von besonderem Vorteil, in denen m = 1.

Erfindungsgemäß sind folgende Zahlenkombinationen der Indizes von Vorteil:

q = 2, r, s und/oder t = 1;
q = 3, r, s und/oder t = 1 und/oder 2;
q = 4, r, s und/oder t = 1, 2 und/oder 3;
q = 5, r, s und/oder t = 1, 2, 3 und/oder 4.

Die Variable -X- in der allgemeinen Formel I bezeichnet zweibindige Sauerstoffatome -O- oder Schwefelatome -S- oder eine sekundäre Aminogruppe-NH-. Erfindungsgemäß ist es von Vorteil, wenn -X- für -O- steht.

Die Variable -A- in der Formel I bedeutet einen zweibindigen Rest $-CR_2-$.

Der Rest R steht hierin für Wasserstoffatome -H, Fluoratome -F, Chloratome -Cl, Bromatome -Br, Nitrilgruppen -CN, Nitrogruppen $-NO_2$, $C_1$-$C_3$-Alkyl- oder-Haloalkylgruppen oder $C_1$-$C_3$-Alkoxygruppen. Beispiele geeigneter Gruppen dieser Art sind Methyl-, Ethyl-, Propyl-, Trifluormethyl-,Trichlormethyl-, Perfluorethyl-, Perfluorpropyl-, Methoxy-, Ethoxy- oder Propoxygruppen.

Erfindungsgemäß von Vorteil sind Wasserstoffatome oder Methylgruppen, welche daher bevorzugt verwendet werden. Insbesondere werden Wasserstoffatome verwendet. Bei den erfindungsgemäß besonders bevorzugten Variablen -A- handelt es sich demnach um Methylengruppen.

Steht in der allgemeinen Formel I mindestens einer der Indices q, r, s und/oder t mindestens für die Zahl 2 kann der Rest R auch für einen $C_2$-$C_4$-Alkandiylund/oder Oxaalkandiylrest stehen, welcher 2 bis 5 Kohlenstoffatome des Restes-A- cyclisch überbrückt. Der Rest -R- kann indes auch für ein Sauerstoffatom -Ostehen, welches 3 bis 5 Kohlenstoffatome des Restes -A- cyclisch überbrückt. Hierdurch werden Cyclopentan-1,2- oder -1,3-diyl-Gruppen, Tetrahydrofuran-2,3-, -2,4-, -2,5- oder -3,4-diyl-Gruppen, Cyclohexan-1,2-, -1,3- oder -1,4-diyl-Gruppen oder Tetrahydropyran-2,3-, 2,4-, 2,5- oder 2,6-diylgruppen, indes keine Epoxidgruppen, gebildet.

Beispiele erfindungsgemäß ganz besonders vorteilhafter Zentralgruppen I leiten von den nachstehend beschriebenen Tetrolen der allgemeinen Formel II ab:

$$C\,[-Aq\text{-}XH]_m\,[-A_r\text{-}XH]_n\,[-A_s\text{-}XH]_o\,[-A_t\text{-}XH]_p \quad \text{(II)},$$

In der allgemeinen Formel II haben die Indizes und die Variablen dieselbe Bedeutung wie vorstehend bei der allgemeinen Formel I angegeben. Erfindungsgemäß ist es von besonderem Vorteil, wenn die Variable X ein Sauerstoffatom -O- darstellt.

Demgemäß sind für die Herstellung der Zentralgruppe I bzw. der erfindungsgemäß zu verwendenden Verbindungen die Tetrole der allgemeinen Formel II von besonderem Vorteil und werden deshalb besonders bevorzugt verwendet. Im folgenden werden sie der Kürze halber als "Tetrole II" bezeichnet.

Beispiele ganz besonders gut geeigneter erfindungsgemäß zu verwendender Tetrole II sind die symmetrischen Tetrole Pentaerythrit, Tetrakis(2-hydroxyethyl)methan oder Tetrakis(3-hydroxypropyl)methan oder die asymmetrischen Tetrole (II1 ) bis (II10):

$$HO\text{-}(\text{-}CH_2\text{-})_2\text{-}C(\text{-}CH_2\text{-}OH)_3, \quad \text{(II1)}$$

$$HO\text{-}(\text{-}CH_2\text{-})_3\text{-}C(\text{-}CH_3\text{-}OH)_3, \quad \text{(II2)}$$

$$HO\text{-}(\text{-}CH_2\text{-})_4\text{-}C(\text{-}CH_2\text{-}OH)_3, \quad \text{(II3)}$$

$$HO\text{-}(\text{-}CH_2\text{-})_5\text{-}C(\text{-}CH_2\text{-}OH)_3, \quad (II4)$$

$$[HO\text{-}(\text{-}CH_2\text{-})_2\text{-}]_2C(CH_2\text{-}OH)_2, \quad (II5)$$

$$[HO\text{-}(\text{-}CH_2\text{-})_2\text{-}]_3C\text{-}CH_2\text{-}OH, \quad (II6)$$

$$HO\text{-}(\text{-}CH_2\text{-})_3\text{-}C[\text{-}(\text{-}CH_2\text{-})_2\text{-}OH]_3, \quad (II7)$$

$$HO\text{-}(\text{-}CH_2\text{-})_3\text{-}C[\text{-}(\text{-}CH_2\text{-})_2\text{-}OH]_2(\text{-}CH_2\text{-}OH), \quad (II8)$$

$$HO\text{-}(\text{-}CH_2\text{-})_4\text{-}C(\text{-}CH_2\text{-}OH)\ [\text{-}(\text{-}CH_2\text{-})_2\text{-}OH]\ [\text{-}(\text{-}CH_2\text{-})_3\text{-}OH] \quad (II9)$$

oder

$$HO\text{-}(\text{-}\ CH_2\text{-})_5\text{-}C\ (\text{-}CH_2\text{-}OH)\ [\text{-}(\text{-}CH_2\text{-})_4\text{-}OH]\ 2 \quad (II10).$$

Von diesen ist das Tretrol (II1) (2,2-Bis-hydroxymethyl-butandiol-(1,4); Homopentaerythrit) besonders hervorzuheben, weil es den erfindungsgemäß zu verwendenden Reaktivverdünnem und damit den erfindungsgemäß Stoffgemischen ganz besonders vorteilhafte Eigenschaften vermittelt. Es wird deshalb ganz besonders bevorzugt verwendet.

In den erfindungsgemäß besonders bevorzugten Reaktivverdünnern sind die vorstehend beschriebenen Variablen -X- über Abstandshaltergruppen mit jeweils einer Hydroxylgruppe verbunden. Dies gilt sinngemäß auch für die Zentralgruppen, welche sich von den Tetrolen Ditrimethylolpropan, Diglycerin oder Ditrimethylolethan ableiten, deren Sauerstoffatome der Variablen -Xentsprechen. Die nachfolgende Beschreibung der Abstandshaltergruppen gilt daher auch für diese von den Zentralgruppen I verschiedenen Zentralgruppen.

Erfindungsgemäß sind als Abstandshaltergruppen alle zweibindigen organischen Reste $R^1$ geeignet.

Beispiele gut geeigneter zweibindiger organischer Reste $R^1$ sind solche, welche sich von den folgenden Verbindungen ableiten:

(i) einem Alkan, Alken, Cycloalkan, Cycloalken, Alkylcycloalkan, Alkylcycloalken, Alkenylcycloalkan, oder Alkenylcycloalken, Aromaten und Heteroamaten sowie einem Alkyl-, Alkenyl-, Cycloalkyl-, Cycloalkenyl-, Alkylcyloalkyl-, Alkylcycloalkenyl-, Alkenylcycloalkytoder Alkenylcycloalkenyl-substitiuierten Aromaten oder Heteroaromaten; oder von

(ii) einem vorstehend genannten Rest, welcher mindestens ein Heteroatom in der Kette und/oder im Rest enthält; oder von

(iii) einem unter (i) oder (ii) genannten Rest, dessen Kette und/oder Ring substituiert ist.

Beispiele geeigneter erfindungsgemäß zu verwendender Substituenten für die Reste $R^1$ sind alle organischen Reste, welche im wesentlichen inert sind, d. h., daß sie keine Reaktionen mit den Verbindungen eingehen, welche für den Aufbau der erfindungsgemäß besonders bevorzugten Reaktiverdünnem oder für deren weitere Umsetzung verwendet werden, insbesondere Halogenatome, Nitrogruppen, Nitrilgruppen oder Alkoxygruppen.

Die Abstandshaltergruppen sind insbesondere über Carbonylgruppen mit den Zentralgruppen I oder den Zentralgruppen, welche sich von den anderen genannten Tetrolen ableiten, verbunden.

Beispiele von organischen Verbindungen, welche sich für die Herstellung dieser Abstandshaltergruppen besonders gut eignen, sind epsilon-Caprolacton, Hexahydrophthalsäure, Hexahydrophthalsäureanhydrid, Phthalsäure, Phthalsäureanhydrid, Hexahydroterephthalsäure, Terephthalsäure, Fumarsäure, Maleinsäure, Maleinsäureanhydrid, Itaconsäure, Itaconsäureanhydrid, Oxalsäure, Malonsäure, Malonsäureanhydrid, Bernsteinsäure, Bernsteinsäureanhydrid, Glutarsäure, Glutarsäureanhydrid, Adipinsäure, Adipinsäureanhydrid, Pimelinsäure, Korksäure, Azelainsäure,

Sebacinsäure oder Decan-, Undecan- oder Dodecandicarbonsäure. Von diesen sind epsilon-Caprolacton, Maleinsäure oder Maleinsäureanhydrid und Hexahydrophthalsäureanhydrid besonders gut geeignet und werden deswegen besonders bevorzugt verwendet.

Bei der Herstellung der besonders bevorzugten erfindungsgemäß zu verwendenden Reaktiverdünner werden die Tetrole II oder die anderen genannten Tetrolen mit den vorstehend genannten difunktionellen Verbindungen zu einem Zwischenprodukt umgesetzt, in das die Hydroxylgruppen eingeführt werden können.

Hierfür kommen alle organischen Verbindungen in Betracht, welche mit den Zwischenprodukten unter Bildung einer Hydroxylgruppe oder unter Erhalt einer Hydroxylgruppe reagieren können. Erfindungsgemäß ist es von Vorteil, eine Verbindung zu verwenden, welche mit den Zwischenprodukten unter Bildung einer Hydroxylgruppe reagiert.

Beispiele gut geeigneter organischer Verbindungen dieser Art sind epoxidgruppenhaltige, insbesondere glycidylgruppenhaltige, Verbindungen.

Beispiele gut geeigneter epoxidgruppenhaltiger, insbesondere glycidylgruppenhaltiger, Verbindungen sind Ethylenoxid, Propylenoxid, Epichlorhydrin, Glycidol, Glycidylether, insbesondere Aryl- und Alkylglycidylether, oder Glycidylester, insbesondere die Glycidylester von tertiären, stark verzweigten, gesättigten Monocarbonsäuren, welche unter dem Handelsnamen Versatic$^R$-Säuren von der Firma Deutsche Shell Chemie vertrieben werden. Von diesen sind die Versatic$^R$-Säureglycidylester ganz besonders vorteilhaft und werden deshalb ganz besonders bevorzugt verwendet.

Für die vorliegende Erfindung ist es wesentlich, daß die vorstehend beschriebenen Reaktiverdünner bei Raumtemperatur flüssig sind. Somit können entweder einzelne flüssige hyperverzweigte Verbindungen verwendet werden oder flüssige Gemische dieser Verbindungen. Dies ist insbesondere dann der Fall, wenn hyperverzweigte Verbindungen verwendet werden, welche wegen ihres hohen Molekulargewichts und/oder ihrer Symmetrie als einzelne Verbindungen fest sind. Der Fachmann kann daher die entsprechenden hyperverzweigten Verbindungen in einfacher Weise auswählen.

Die Herstellung der erfindungsgemäß besonders bevorzugten Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele erfindungsgemäß besonders bevorzugter Reaktiverdünner sind die cyclischen und/oder acyclischen $C_9$-$C_{16}$-Alkane, die mit mindestens zwei Hydroxyl- oder mindestens einer Hydroxyl- und mindestens einer Thiolgruppe funktionalisiert sind, und der Kürze halber im folgenden als "fünktionalisierte Alkane "bezeichnet werden.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-npropyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyloctan, 1'-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethyl-undecan oder 3,6-Dimethyl-9-ethyl-undecan.

Beispiele geeigneter Alkane dieser Art mit 16 Kohlenstoffatomen sind 3,7-Diethyl-dodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate ganz besonders vorteilhaft.

Für die vorliegende Erfindung ist es wesentlich, daß die funktionalisierten Alkane, welche sich von diesen verzweigten, cyclischen oder acyclischen Alkanen als Grundgerüsten ableiten, bei Raumtemperatur flüssig sind. Somit können entweder einzelne flüssige funktionalisierte Alkane verwendet werden oder flüssige Gemische dieser Verbindungen. Dies ist insbesondere dann der Fall, wenn funktionalisierte Alkane verwendet werden, welche wegen ihrer hohen Anzahl an Kohlenstoffatomen im Alkan-Grundgerüst als einzelne Verbindungen fest sind. Der Fachmann kann daher die entsprechenden funktionalisierten Alkane oder die Reaktivverdünner in einfacher Weise auswählen.

Für die Erfindung ist es außerdem wesentlich, daß die funktionalisierten Alkane einen Siedepunkt von über 200, vorzugsweise 220 und insbesondere 240 °C aufweisen. Darüberhinaus sollen sie eine niedrige Verdampfungsrate haben.

Erfindungsgemäß ist es außerdem von Vorteil, wenn die funktionalisierten Alkane acyclisch sind.

Die funktionalisierten Alkane weisen primäre und/oder sekundäre Hydroxlgruppen oder primäre und/oder sekundäre Hydroxlgruppen und Thiolgruppen auf. Erfindungsgemäß ist es von Vorteil, wenn primäre und sekundäre Gruppen dieser Art in einem funktionalisierten Alkan vorhanden sind.

Bei den funktionalisierten Alkanen handelt es sich demnach um Polyole oder um Polyol-polythiole, insbesondere aber Polyole. Diese Verbindungen können einzeln oder gemeinsam als Gemische verwendet werden. Besondere Vorteil ergeben sich, wenn die Polyole Diole und/oder Triole, insbesondere aber Diole sind. Sie werden deshalb ganz besonders bevorzugt verwendet.

Ganz besonders vorteilhafte Polyole sind die stellungsisomere Dialkyloctandiole, insbesondere Diethyloctandiole. Hiervon ist insbesondere 2,4-Diethyl-octandiol-1,5 hervorzuheben.

Die vorstehend beschriebenen Reaktivverdünner sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethylhexanol an.

Weitere Beispiele erfindungsgemäß besonders bevorzugter Reaktivverdünner werden erhalten, indem Oligomere der Formel III,

$$R^3R^4C=[=CH-R^2-CH=]_v=CR^5R^6 \qquad (III),$$

worin $R^2$ = $-(-CH_2-)_w-$, worin der Index w eine ganze Zahl von 1 bis 6 bedeutet, oder worin X = $-CH_2-$ oder ein Sauerstoffatom;

$R^3$, $R^4$, $R^5$ und $R^6$ unabhängig voneinander = Wasserstoffatome oder Alkyl; und

Index v = eine ganze Zahl von 1 bis 15;

hydroformyliert und die hierbei resultierenden aldehydgruppenhaltigen Produkte III zu den Polyolen III reduziert werden, welche gegebenenfalls teilweise oder vollständig hydriert werden.

Der Index v in der Formel III steht für die Anzahl der zweiwertigen Reste $R^2$, welche in die von cyclischen Olefinen wie beispielsweise Cyclopropen, Cyclopenten, Cyclobuten, Cyclohexen, Cyclohepten, Norbonen, 7-Oxanorbonen oder Cyclooctên abgeleiteten Oligomere I durch ringöffnende Metathesereaktion eingeführt wurden. Vorzugsweise weisen die erfindungsgemäß einsetzbaren Oligomergemische III bei einem möglichst großen Anteil, wie z.B. mindestens 40 Gew.-% (ermittelt durch die Flächenintegration der Gaschromatogramme; Gerät: Hewlett Packard; Detektor. Flammenionisations-Detektor; Säule; DB 5,30 m x 0.32 mm, Belegung 1µC; Temperaturprogramm: 60° C 5 min, isotherm, Heizrate 10° C/min Max: 300° C), einen Wert von v > 1 auf. Der Wert v und somit der Grad der ringöffnenden Metathese kann, wie weiter unten ausgeführt, durch die Aktivität des verwendeten Metathesekatalysators beeinflußt werden.

Die Reste $R^3$, $R^4$, $R^5$ und $R^6$stehen unabhängig voneinander für Wasserstoff oder Alkyl, wobei der Ausdruck "Alkyl" geradkettige und verzweigte Alkylgruppen umfaßt.

Vorzugsweise handelt es sich dabei um geradekettige oder verzweigte $C_1$-$C_{15}$-Alkyl-, bevorzugt $C_1$-$C_{10}$-Alkyl, insbesondere bevorzugt $C_1$-$C_5$-Alkylgruppen. Beispiele für Alkylgruppen sind insbesondere Methyl, Ethyl, Propyl, 1-Methylethyl, Butyl, 1-Methylpropyl, 2-Methylpropyl 1,1-Dimethylethyl. n-Pentyl, 1-Methylbutyl, 2-Methylbutyl, 3-Methylbutyl, 1-2.Dimenthylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylpropyl, 1,2,2-Trimethylpropyl. 1-Ethylbutyl, 2-Ethylbutyl, 1-Ethyl-2-Methylpropyl, n-Heptyl, 1-Methylhexyl, 1-Ethylpentyl, 2-Ethylpentyl, 1-Propylburyl, Octyl, Decyl, Dodecyl, etc.

Der Verzweigungsgrad und die Anzahl der Kohlenstoffatome der endständigen Alkylreste $R^3$, $R^4$, $R^5$ und $R^6$ hängen von der Struktur der acyclischen Monoolefine des verwendeten Kohlenwasserstoffgemisches und der Aktivität des Katalysators ab. Wie im folgenden genauer beschrieben wird, beinflußt die Aktivität des Katalysators den Grad der Kreuzmetathese (Selbstmetathese) der acyclischen Olefine unter Bildung strukturell neuer Olefine, in die sdann formal Cyclopenten im Sinne einer ringöffnenden Metathesepolymerisation insertiert wird.

Vorzugsweise werden Oligomerengemische eingesetzt, die einen erhöhten Anteil am Oligomeren mit nur einer terminalen Doppelbindung aufweisen. Das Oligomer wird vorzugsweise hergestellt, indem man ein ein cyclisches

Monoolefin wie Cyclopropen, Cyclobuten, Cyclopenten, Cyclohexen, Cyclohepten, Cycloocten, Norbonen oder 7-Oxanorbonen sowie acyclische Monoolefine enthaltendes Kohlenwasserstoffgemisches aus der Erdölverarbeitung durch Cracken ($C_5$-Schnitt) in einer homogenen oder heterogenen Metathesereaktion umsetzt.

Die Metathesereaktion umfaßt formal

a) die Disproportionierung der acyclischen Monoolefine des Kohlenwasserstoffgemisches durch Kreuzmetathese,

b) die Oligomerisation des cyclischen Monoelefins durch ringöffnende Metathese,

c) den Kettenabbruch durch Umsetzung der Oligomere aus b) mit einem acyclischen Olefin des Kohlenwasserstoffgemisches oder eines Produktes aus a),

wobei die Schritte a) und/oder b) und/oder c) mehrmals für sich alleine oder in Kombination durchlaufen werden können.

Schritt a)

Die Kreuzmetathese der acyclischen Monoolefine soll am Beispiel der Metathese von 1-Penten und 2-Penten erläutert werden:

$$CH_2{=}CH{-}C_3H_7$$

Propen + 1-Buten + 2-Hexen

+ 3 Hepten

$$CH_3{-}CH{=}CH{-}C_2H_5$$

Durch Kombination aus Kreuzmetathese verschiedener und Selbstrnethathese gleicher acyclischer Olefine, wie z.B. der Selbstmetathese von 1-Penten zu Ethen und 4-Octen sowie durch mehrmaliges Durchlaufen dieser Reaktion werden eine Vielzahl von Monoolefinen mit unterschiedlicher Struktur und Kohlenstoffatomanzahl erhalten, die die Endgruppen der Oligomeren I bilden. Über den Anteil an Kreuzmetatheseprodukten, die mit steigender Aktivität des verwendeten Katalysators zunimmt, wird auch der Doppelbindungsanteil der Oligomeren beeinflußt. So wird z.B. bei der zuvor beschriebenen Selbstmethathese von 1-Penten Ethen freigesetzt, welches gegebenenfalls gasförmig entweichen kann, wobei ein Doppelbindungsäquivalent der Umsetzung entzogen wird. Gleichzeitig steigt der Anteil an Oligomeren ohne terminale Doppelbindungen. So wird in dem obigen Beispiel z.B. durch Insertion von cyclischem Monoolefin in 4-Octen ein Oligomer ohne terminale Doppelbindungen gebildet.

Schritt b)

Die durchschnittliche Anzahl an Insertionen des cyclischen Monoolefins in die wachsende Kette im Sinne einer ringöffnenden Metathesepolymerisation bestimmt das mittlere Molekulargewicht des gebildeten Oligomerengemisches I. Vorzugsweise werden durch das erfindungsgemäße Verfahren Oligomerengemische I mit einem mittleren Molekulargewicht von mindestens 274 g pro Mol gebildet, was einer durchschnittlichen Anzahl von drei Einheiten eines cyclischen Monoolefins pro Oligomer entspricht.

Schritt c)

Der Kettenabbruch erfolgt durch Umsetzung von Oligomeren, welches noch ein aktives Kettenende in Form eines Katalysatorkomplexes (Alkylidenkomplexes) aufweist, mit einem acyclischen Olefin, wobei im Idealfall ein aktiver Katalysatorkomplex zurückgewonnen wird. Dabei kann das acyclische Olefin unverändert aus dem ursprünglich zur Reaktion eingesetzten Kohlenwasserstoffgemisch stammen oder zuvor in einer Kreuzmetathese nach Stufe a) modifiziert worden sein.

Das Verfahren eignet sich ganz allgemein zur Herstellung von Oligomeren III aus Kohlenwasserstoffgemischen, die acyclische und cyclische Monoolefine enthalten. Monoolefine wie z.B. Cyclobuten, Cyclopenten, Cyclohexen, Cyclohepten, Norbonen oder 7-Oxanorbonen, insbesondere Cyclopenten. Varianten dieses Verfahrens werden beispielsweise in dem Artikel von M. Schuster und S. Bleckert in Angewandte Chemie, 1997, Band 109, Seiten 2124 bis 2144, beschrieben.

Vorzugsweise wird ein bei der Erdölverarbeitung großtechnisch anfallendes Kohlenwasserstoffgemisch verwendet, das gewünschtenfalls zur Entfernung von Dienen zuvor einer katalytischen Teilhydrierung unterzogen werden kann. Besonders geeignet für die Verwendung im vorliegenden Verfahren ist z.B. ein an gesättigten und ungesättigten $C_5$-Kohlenwasserstoffen angereichertes Gemisch ($C_5$-Schnitt). Zur Gewinnung des $C_5$-Schnittes kann z.B. beim Steamcracken von Naphtha anfallendes Pyrolysebenzin zuerst einer Selektivhydrierung unterzogen werden, um die enthaltenen Diene und Acetylene selektiv in die entsprechenden Alkane und Alkene zu überführen und anschließend einer fraktionierten Destillation unterworfen werden, wobei zum einen der für weitere chemische Synthesen wichtige $C_6$-$C_8$-Schnitt, der die aromatischen Kohlenwasserstoffe enthält, als auch der für das erfindungsgemäße Verfahren verwendete $C_5$-Schnitt anfallen.

Der $C_5$-Schnitt weist im allgemeinen einen Gesamtolefingehalt von mindestens 30 Gew.-%, bevorzugt mindestens 40 Gew.-%, insbesondere mindestens 50 Gew.-% auf.

Geeignet sind dabei $C_5$-Kohlenwasserstoffogemische mit einem Cyclopentengesamtgehalt von mindestens 5 Gew.-%, bevorzugt mindestens 10 Gew.-%, insbesondere mindestens 12 Gew.-%, und im allgemeinen nicht mehr als 30 Gew.-%, vorzugsweise nicht mehr als 20 Gew.-%.

Des weiteren weisen geeignete $C_5$-Kohlenwasserstoffgemische einen Anteil von Pentenisomeren an den acyclichen Monoolefinen von mindestens 70 -Gew.-% bevorzugt mindestens 80 Gew.-%, insbesondere mindestens 90 Gew.-% auf.

Das Herstellungsverfahren kann auch als großtechnisch anfallender $C_5$-Schnitt mit einem Gesamtolefinanteil von z.B. 50 bis 60 Gew.-%, wie etwa 56 %, einem Cyclopentenanteil von z.B. 10 bis 20 Gew.-%, wie etwa 15 Gew.-% und einem Anteil an Pentenisomeren von z.B. 33 bis 43 Gew.-%, wie etwa 38 Gew.-%, wobei etwa 16 Gew.-% auf das n-Penten und etwa 22 Gew.-% auf isomere Pentene entfallen, ausgeführt werden.

Nach einer speziellen Ausführungsform wird bei dem Herstellungsverfahren ein Kohlenwasserstoffgemisch verwendet, welches den $C_5$-Schnitt und eine acyclische $C_4$-Olefine enthaltende Erdölfraktion (Raffinat-2) umfaßt.

Nach einer anderen speziellen Ausführungsform des Herstellungsverfahrens wird ein Kohlenwasserstoffgemisch verwendet, welches den $C_5$-Schnitt und Ethen umfaßt. Dabei werden Oligomerengemische III mit einem erhöhten Doppelbindungsanteil erhalten. Dies wird zum einen durch Ethenolyse der im $C_5$-Schnitt enthaltenen acyclischen n- und iso-Pentene zu kürzerkettigen $\alpha$-Olefinen, wie Propen und 1-Buten, erreicht, die mit Cyclopenten in einer ringöffnenden Metathesereaktion unter Bildung von Oligomeren III mit jeweils einer terminalen Doppelbindung reagieren. In Gegenwart von Ethen wird auch die Selbstmetathese der acyclischen Olefine unter Bildung weiteren Ethens, wie z.B. die Selbstmetathese von 1-Penten zu Ethen und 4-Octen, welches als Kettenabbruchreagenz zu Produkten ohne terminale Doppelbindungen führt, unterdrückt. Zum anderen wird eine weitere Erhöhung des Doppelbindungsanteils durch die Ethenolyse von Cyclopenten mit Ehten zu 1,6-Heptadien erzielt. Dabei entstehen Oligomerenfolgen, die jeweils über zwei terminale Doppelbindungen verfügen. Vorzugsweise resultieren bei einer Verwendung der so erhaltenen Oligomerengemische III mit erhöhtem Doppelbindungsanteil zur Funktionalisierung Oligomerengemische III mit erhöhter Funktionalitätsdichte.

Geeignete Katalysatoren für die Metathese sind nach dem Stand der Technik bekannt und umfassen homogene und heterogene Katalysatorsysteme. Im allgemeinen basieren die für das Herstellungsverfahren geeigneten Katalysatoren auf einem Übergangsmetall der 6., 7. oder 8. Nebengruppe des Periodensystems, wobei vorzugsweise Katalysatoren auf Basis von Mo, W, Re und Ru verwendet werden.

Geeignete homogene Katalysatorsysteme sind im allgemeinen Übergangsmetallverbindungen, die gegebenenfalls in Kombination mit einem Cokatalysator und/oder gegebenenfalls in Gegenwart der Olefinedukte befähigt sind, einen katalytisch aktiven Metallcarbenkomplex zu bilden. Solche Systeme werden z.B. von R. H. Grubbs in Comprehensive Organometallic Chemistry, Pergamon Press, Ltd., New York, Band 8, Seite 499 ff. (1982) beschrieben.

Geeignete Katalysator/Cokatalysator-Systeme auf W-, Mo- und Re-Basis können z.B. mindestens eine lösliche Übergangsmetallverbindung und ein alkylierendes Agens umfassen. Dazu zählen z.B. $MoCl_2 (NO)_2(PR_3)_2/Al_2 (CH_3)_3Cl_3$; $WCl_6/BuLi$; $WCl_6/ElAlCl_2(Sn(CH_3)_4/EtOH$; $WOCl_4/Sn(CH_3)_4$; $WOCl_2(O\text{-}[2,6\text{-}Br_2\text{-}C_6H_3]/Sn(CH_3)_4$; $CH_3ReO_3/C_2H_5AlCl_2$, wobei die vier letztgenannten für das erfindungsgemäße Verfahren bevorzugt sind.

Weitere als Metathese-Katalysatoren geeignete Übergangsmetall-Alkyliden-Komplexe werden von R. R. Schrock in Accounts of Chemical Research, Band 23, Seite 158 ff. (1990) beschrieben. Allgemein handelt es sich um vierfach koordinierte Mo- und W-Alkylidenkomplexe, die zusätzlich zwei sperrige Alkoxy- und einen Imido-Liganden aufweisen. Dabei werden für das erfindungsgemäße Verfahren bevorzugt $((CH_3)_3CO)_2Mo(=N\text{-}[2,6\text{-}(i\text{-}C_3H_7)_2\text{-}C_6H_3])(= CHC(CH_3)_2C_6H_5)$ und $[\{CF_3)_2C(CH_3)O]_2Mo(=N\text{-}[2,5\text{-}(i\text{-}C_3H_7)\text{-}C_6H_3])(=CH(CH_3)_2C_6H_5)$ verwendet.

Insbesondere werden als homogene Metathesekatalysatoren die Katalysatoren verwendet, die in der Angewandte Chemie, Band 107, Seiten 2179 ff. (1995), in Journal of the American Chemical Society, Band 118, Seite 100 ff. (1996) sowie in Journal of the Chemical Society, Chemical Commununications, Seite 1127 ff. (1995) beschrieben sind. Dazu zählen insbesondere $RuCl_2(=CHR)(PR'_3)_2$, bevorzugt $RuCl_2(=CHC_6H_5)(P(C_6H_{11})_3)_2$, $(\eta^6\text{-p-Cymol})RuCl_2(p(C_6H_{11})_3)$ und 3 Moläquivalenten Diazoalkan ($(CH_3)_3SiCHN_2$ oder $C_6H_5CHN_2$) "in situ" erzeugt.

Geeignete heterogene Katalysatorsysteme umfassen im allgemeinen eine Übergangsmetallverbindung auf

einem inerten Träger, die befähigt ist ohne Cokatalysator, durch Reaktion mit den Olefinedukten einen katalytischen aktiven Alkylidenkomplex zu bilden. Bevorzugt werden $Re_2O_7$ und $CH_3ReO_3$ verwendet.

Geeignete anorganische Träger sind die hierfür üblichen Oxide, insbesondere Silicium- und Aluminiumoxide, Alumosilikate, Zeolithe, Carbide, Nitride, etc. und deren Mischungen. Bevorzugt werden als Träger $Al_2O_3$, $SiO_2$ und deren Mischungen, gegebenenfalls in Kombination mit $B_2O_3$ und $Fe_2O_3$ verwendet.

Die zuvor genannten homogenen und heterogenen Katalysatorsysteme unterscheiden sich stark in ihrer katalytischen Aktivität, so daß die einzelnen Katalysatoren unterschiedliche optimale Reaktionsbedingungen für die Metathese aufweisen. Wie zuvor bereits beschrieben, beeinflußt die katalytische Aktivität bezüglich der Kreuzmetathese (Schritt a)) auch die Produktverteilung der von Cyclopenten abgeleiteten Oligomerengemische I. So sind die auf Ruthenium basierenden homogenen Katalysatorensysteme $RuCl_2(=CHC_6H_5)(P(C_6H_{11})_3)_3$, ($\eta^6$-p-Cymol)$RuCl_2(P(C_6H_{11})_3)/(CH_3)_3SICHN_2$ und ($\eta^6$-p-Cymol)$RuCl_2(P(C_6H_{11})_3)/C_6H_5CHN_2$ für das Herstellungsverfahren besonders geeignet. Dabei weist der erstgenannte Rutheniumkomplex eine höhere katalytische Aktivität als die beiden letztgenannten auf., was bei ansonsten gleichen Reaktionsbedingungen zu höheren Raum-Zeit-Ausbeuten führt. Gleichzeitig tritt beim ersten Komplex jedoch auch vermehrt die Kreutmetathese auf, wobei zum Teil auch Ethen freigesetzt wird und somit das erhaltene von Cyclopenten abgeleitete Oligomerengemisch III einen etwas geringeren Anteil an Doppelbindungen aufweist, was sich z.B. in einer geringeren Jodzahl ausdrückt. Zudem steht aufgrund der Kreuzmetathese eine größere Anzahl an acyclischen Olefinen ohne endständige Doppelbindungen zur Verfügung, so daß mit dem erstgenannten homogenen Rutheniumkatalysator vermehrt von Cyclopenten abgeleitete Oligomere I erhalten werden, die nur eine oder keine terminale Doppelbindung aufweisen. Die beiden letztgenannten Rutheniumkomplexe weisen eine etwas geringere katalytische Aktivität als der erstgenannte auf, so daß mit ihnen nach dem erfindungsgemäßen Verfahren von Cyclopenten abgeleitete Oligomerengemische I erhalten werden, die einen höheren Doppelbindungsanteil und somit eine höhere Jodzahl sowie einen größeren Anteil an terminalen Doppelbindungen aufweisen.

Auch die heterogenen Katalysatorensysteme weisen die zuvor beschriebenen Aktivitätsunterschiede mit der entsprechenden Beeinflussung der Metatheseprodukte auf. Wird für das Herstellungsverfahren $CH_3ReO_3$ auf $Al_2O_3$ als heterogener Katalysator verwendet, so weist dieser eine höhere katalytische Aktivität als das entsprechende homogene Katalysatorensystem aus $CH_3ReO_3/(C_2H_5)AlCl_2$ auf.

Vorteilhafterweise wird als heterogener Katalysator $Re_2O_7$ auf $Al_2O_3$ verwendet. Dieser weist eine $RuCl_2(=CHC_6H_5)$ $(P(C_6H_{11})_3)_2$ annähernd vergleichbare Aktivität sowie eine ähnliche Produktverteilung auf und kann nach Regeneration im Luftstrom bei erhöhten Temperaturen, wie z.B. etwa 550° C erneut eingesetzt werden.

Gewünschtenfalls können somit je nach verwendetem Katalysator von Cyclopenten abgeleitete Oligomerengemische III mit wechselnden Doppelbindungsanteilen und wechselnden Anteilen an terminalen Doppelbindungen erhalten werden.

Nach einer speziellen Ausführungsform des Herstellungsverfahrens wird als Metathesekatalysator ein homogener Katalysator auf Rutheniumbasis, ausgewählt unter $RuCl2(=CHC_6H_5)$ $(P(C_6H_{11})_3)_2$, ($\eta^6$-p-Cymol)$RuCl_2$ $(P(C_6H_{11})3)/(CH_3)_3SiCHN_2$ und ($\eta^6$-p-Cymol)$RuCl_2(P(C_6H_{11})_3)/C_6H_5CHN_2$, verwendet, der dem Reaktionsgemisch als Lösung in einem organischen Lösungsmittel zugegeben wird. Geeignete Lösungsmittel sind z.B. aromatische Kohlenwasserstoffe, wie Toluol und Xylol sowie halogenierte Alkane, wie $CH_2Cl_2$, $CHCl_3$, etc.

Die Reaktionstemperatur liegt bei reaktiven Katalysatorsystemen bei -20 bis 200°C, bevorzugt 0 bis 100° C, insbesondere 20 bis 80° C.

Die Reaktion kann bei einem erhöhten Druck von bis zu 5 bar, bevorzugt bis zu 2 bar, oder insbesondere bevorzugt bei Umgebungsdruck durchgeführt werden.

Nach einer weiteren speziellen Ausführungsform des Herstellungsverfahrens wird als Metathesekatalysator ein heterogener Katalysator auf Rhenium-Basis, ausgewählt unter $CH_3ReO_3/Al_2O_3$ und bevorzugt $Re_2O_7/Al_2O_3$ verwendet, der dem Reaktionsgemisch ohne Lösungsmittelzusatz zugegeben wird.

Die Reaktionstemperatur liegt bei diesen, im Verglech zu den vorgenannten homogenen Katalysatorsystemen etwas weniger aktiven Katalysatoren bei etwa 20 bis 120° C, insbesondere 40 bis 80° C.

Die Reaktion wird vorzugsweise bei einem erhöhten Druck von 2 bis 20 bar, bevorzugt 3 bis 15 bar, insbesondere 4 bis 12 bar durchgerührt.

Die verfahrenstechnische Ausführung des Herstellungsverfahrens kann sowohl kontinuierlich als auch diskontinuierlich erfolgen. Geeignete Reaktionsapparaturen sind dem Fachmann bekannt und werden z.B. in Ullmanns Enzyklopädie der technischen Chemie, Band 1, Seite 743 ff. (1951) beschrieben. Dazu zählen für das diskontinuierliche Verfahren z.B. Rührkessel und für das kontinuierliche Verfahren z.B. Rohrreaktoren.

Nach einer geeigneten diskontinuierlichen Variante des Herstellungsverfahrens kann z.B. der $C_5$-Schnitt an einem der zuvor als bevorzugt beschriebenen, homogenen Rutheniumkatalysatoren, welcher gewünschtenfalls im Reaktorbehälter "in situ" erzeigt wird, in einer Metathesereaktion zu den Cyclopenten abgeleiteten Oligomerengemischen I umgesetzt werden.

Nach einer weiteren geeigneten kontinuierlichen Variante des Herstellungsverfahrens kann z.B. der $C_5$-Schnitt an einem der zuvor als bevorzugt beschriebenen heterogenen Rheniumkatalysatoren in einem Rohrreaktor

umgesetzt werden.

Nach beiden möglichen Verfahrensvarianten werden in Abhängigkeit vom verwendeten Katalysator und den übrigen Reaktionsparametern, vor allem der Reaktionstemperatur, Raum-Zeit-Ausbeuten von mindestens 10 g $l^{-1}$ $h^{-1}$, bevorzugt mindestens 15 g $l^{-1}$ $h^{-1}$, erzielt. Je nach Aktivität des Katalysators können jedoch auch wesentlich höhere Raum-Zeit-Ausbeuten bis etwa 500 g $l^{-1}$ $h^{-1}$ erzielt werden.

Die Auftrennung des Reaktionsgemisches erfolgt nach üblichen Verfahren. Dazu zählt z.B. die fraktionierte Destillation, gegebenenfalls unter vermindertem Druck, oder die Trennung bei erhöhten Temperaturen und Normalsdruck in einem Fallfilmverdampfer. Dabei können leichtsiedende Fraktionen, die noch nicht umgesetzte Olefine enthalten, gewünschtenfalls in die Reaktionsapparatur zurückgeführt werden. Vorteilhafterweise wird bei dem Herstellungsverfahren eine weitergehende Umsetzung der im $C_5$-Schnitt enthaltenen Olefine zu Oligomeren III erzielt, so daß die abgetrennten Leichtsieder ein $C_5$-Kohlenwasserstoffgemisch mit überwiegend gesättigten cyclischen und acyclischen Verbindungen umfassen.

Wie zuvor beschrieben, kann die Anzahl und die Lage der Doppelbindungen in den Oligomeren III durch die Reaktionsbedingungen, insbesondere den jeweils verwendeten Katalysator beeinflußt werden. Nach dem beschriebenen Verfahren werden Cyclopenten-Oligomere III erhalten, wobei die Jodzahl mindestens 250 g $I_2$/100 g Oligomere I, bevorzugt mindestens 300 g $I_2$/100 g Oligomere I beträgt.

Das mittlere Molekulargewicht dieser von cyclischen Monoolefinen, insbesondere Cyclopenten abgeleiteten Oligomere III beträgt mindestens 274 g/mol, was einem mittleren Umsatz von drei Cyclopenten-Einheiten pro Oligomer III entspricht, wobei in diesem Fall ein Kettenabbruch durch ein acyclisches Penten (und nicht durch ein Kreuzmetatheseprodukt) angenommen wird.

Zur Herstellung der erfindungsgemäß zu verwendenden Reaktiverdünner werden die vorstehend im Detail beschriebenen Oligomere III in üblicher und bekannter Weise hydroformuliert. Im allgemeinen werden hierbei die Oligomeren III in Gegenwart von geeignete Übergangsmetalle enthaltenden Katalysatoren mit Wasserstoff und Kohlenmonoxid unter Normaldruck oder unter erhöhtem Druck bei Temperaturen von 50 bis 150°C zu aldehydgruppenhaltigen Produkten III umgesetzt.

Ein Beispiel für ein geeignetes Übergangsmetall ist Rhodium.

Die so erhaltenen Produkte III werden isoliert und in üblicher und bekannter Weise zu den erfindungsgemäß zu verwendenden Reaktiverdünnem reduziert. Hierfür kommen alle Reduktionsmittel in Betracht, mit denen Aldehydgruppen zu Hydroxylgruppen reduziert werden können. Beispiele geeigneter Reduktionsmittel sind Borhydride wie Natriumtetrahydroboranat oder Wasserstoff in Gegenwart von Hydrierungskatalysatoren.

Beispiele geeigneter Hydroformylierungs- und Reduktionsverfahren werden in der europäischen Patentschrift EP-A-0 502 839 beschrieben.

Die erfindungsgemäß besonders bevorzugten Reaktiverdünner können in üblicher und bekannter Weise teilweise oder vollständig hydriert werden. Hierfür kommen u.a. die vorstehend genannten Reduktionsmittel in Betracht.

Die erfindungsgemäß besonders bevorzugten Reaktiverdünner weisen eine Hydroxylzahl (OHZ) von 200 bis 650, insbesondere 250 bis 450, auf. Ihr mit Hilfe der Gelpermeationschromatographie mit Polystyrol als internem Standard ermitteltes zahlenmittleres Molekulargewicht $M_n$ liegt im Bereich von 400 bis 1.000, insbesondere 400 bis 600. Ihr mit Hilfe der Gelpermeationschromatographie und Polystyrol als internem Standard ermitteltes massenmittleres Molekulargewicht $M_w$ liegt im Bereich von 600 bis 2.000, insbesondere 600 bis 1.100. Die Uneinheitlichkeit $M_n/M_w$ liegt bei 1,4 bis 3, insbesondere 1,7 bis 1,9.

Ein besonders hervorragender erfindungsgemäß zu verwendender Reaktiverdünner weist ein OHZ von 350, ein $M_n$ von 561 und ein $M_w$ von 1.068 auf.

Weitere Beispiele erfindungsgemäß besonders bevorzugter Reaktiverdünner sind die nachfolgend beschriebenen Epoxide, welche vor oder nach der (Co)Polymerisation, insbesondere aber vor der (Co)Polymerisation, mit niedermolekularen Mono- und/oder Polycarbonsäuren zu Polyolen umgesetzt werden, welche wiederum als Reaktiverdünner bei der Vernetzung über die Hydroxylgruppen dienen.

Weitere Beispiele erfindungsgemäß besonders bevorzugter Reaktiverdünner sind Epoxidgruppen enthaltende Verbindungen wie

- Glycidylether von Polyolen oder Polyphenolen wie Glycerin, Diglycerin, Glucitol, Erythritol, Pentaerythrit, Dipentaerythrit, Trimethylolpropan, Trimethylolethan, Ditrimethylolpropan, Ditrimethylolethan, Tetrakis(2-hydroxyethyl)ethan, Tetrakis(3-hydroxypropyl)methan, die vorstehend beschriebenen Tetrole II1 bis II10, die vorstehend beschriebenen hyperverzweigten Verbindungen, die vorstehend beschriebenen funktionalisierten Alkane, die vorstehend beschriebenen durch Metathese, Hydroformylierung und Hydrierung hergestellten oligomeren Polyole, Brenzcatechin, Resorcinol, Hydrochinon, Pyrogallol, Phloroglucin, (p-Hydroxy-phenyl)-phloroglucin, 5-(7-Hydroxy-naphth-1-yl)-pyrogallol, Bisphenol F, Bisphenol A oder Novolake;

- niedermolekulare Epoxidharze oder Oligomere, welche Monomere (A6) einpolymerisiert enthalten;

- Glycidylester von Versaticsäure[R];
- Epoxidharzester von gesättigten und ungesättigten Fettsäuren (epoxidierte Öle); Boden
- epoxidierte Triglyceride natürlicher Öle und Ester.

Von den vorstehend im Detail beschriebenen Reaktiverdünnem sind die Diethyloctandiole, insbesondere 2,4-Diethyl-octandiol-1,5, sowie die durch Metathese, Hydroformylierung und Hydrierung hergestellten oligomeren Polyole hervorzuheben. Erfindungsgemäß werden diese ganz besonders bevorzugt als Reaktiverdünner verwendet.
Ein gewisser Anteil der erfindungsgemäß zu verwendenden Reaktiverdünner in einem erfindungsgemäßen Stoffgemisch kann nach der (Co)Polymerisation mit geeigneten olefinisch ungesättigten Verbindungen modifiziert werden, so daß das erfindungsgemäße Stoffgemisch sowohl thermisch als auch durch aktinisches Licht und/oder Elektronenstrahlen härtbar ist. Beispiele geeigneter Verbindungen für diese Modifizierung sind die vorstehend beschriebenen Monomeren (A2), (A5) oder (A6).
Die erfindungsgemäße (Co)Polymersiation in den erfindungsgemäß zu verwendenden Reaktiverdünnem weist keine methodische Besonderheiten auf, sondern erfolgt mit Hilfe der auf dem Kunststoffgebiet üblichen und bekannten Methoden der kontinuierlichen oder diskontinuierlichen Homo- oder Copolymerisation unter Normaldruck oder Überdruck in Rührkesseln, Autoklaven, Rohrreaktoren oder Taylorreaktoren.
Beispiele geeigneter (Co)Polymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.
Erfindungsgemäß sind Taylorreaktoren vorteilhaft und werden deshalb für das erfindungsgemäße Verfahren bevorzugt verwendet.
Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität v des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d/r_i)^{1/2} \qquad (I)$$

mit $d = r_a - r_i$.
Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.
Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.
Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungsystem verhält sich somit wie ein ideales Strömungsrohr, indem die Wirbelpaare mit konstanter Verweilzeit wie ideale Rührkessel durch den Spalt wandern.
Erfindungsgemäß von Vorteil sind hierbei Taylorreaktoren mit einer äußeren Reaktorwand und einem hierin befindlichen konzentrisch oder exzentrisch angeordneten Rotor,einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für

die Taylorströmung erfüllt sind, d.h., daß sich der Ringspalt in Durchflußrichtung verbreitert.

Als (Co)Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst. konstantes Radikalangebot vorliegt. Als Beispiele für einsetzbare Initiatoren werden genannt: Dialkylperoxide, z.B. Di-tert.-Butylperoxid und Dicumylperoxid, Hydroperoxide, z.B. Cumolhydroperoxid und tert.-Butylhydroperoxid, Perester, z.B. tert.-Butylperbenzoat, tert.-Butylperpivalat, tert.-Butylper-3,5,5-trimethylhexanoat und tert.-Butylper-2-ethylhexanoat, oder Bisazoverbindungen wie Azobisiobutyronitril.

Außer den erfindungsgemäß zu verwendende Reaktivverdünnem kann das Reaktionsmedium noch weitere Bestandteile in untergeordneten Mengen enthalten. Im Rahmen der vorliegenden Erfindung bezeichnet der Begriff "untergeordnete Menge" einen Anteil an sonstigen Bestandteilen, durch welchen das durch die Reaktivverdünner hervorgerufene vorteilhafte Eigenschaftsprofil des Reaktionsmediums nicht nachteilig beeinflußt, sondern in vorteilhafter Weise variiert wird.

Beispiele geeigneter weiterer Bestandteile sind Wasser, Kohlendioxid, organische Lösemittel oder Additive, welche auf dem Gebiet der Beschichtungsmittel, Klebstoffe und Dichtungsmassen üblich und bekannt sind. Beispiele geeigneter Additive werden nachstehend beschrieben.

Die Polymerisationsbedingungen (Reaktionstemperatur, Zulaufzeit der Monomerenmischung und Polymerisationsinitiatoren, evtl. Mitverwendung von Molekulargewichtsreglern, z.B. Mercaptane, Thioglykolsäureester, alpha-Diphenylethen, Nitroxylradikalgruppen enthaltende Verbindungen oder Chlorwasserstoff) werden so ausgewählt, daß insbesondere die erfindungsgemäß mit besonderem Vorzug hergestellten und verwendeten Polyacrylate ein zahlenmittleres Molekulargewicht wie vorstehend angegeben (bestimmt durch Gelpermeationschromatographie unter Verwendung von Polystyrol als Eichsubstanz) aufweisen. Die Säurezahl kann vom Fachmann durch Einsatz entsprechender Mengen der Komponente (A5) eingestellt werden. Analoges gilt für die Einstellung der Hydroxylzahl und die Epoxidzahl; Sie sind über die Menge an eingesetzter Komponente (A4) bzw. (A6) steuerbar.

Die erfindungsgemäßer Verfahrensweise hergestellten erfindungsgemäßen Stoffgemische weisen den besonderen Vorteile auf, daß sie unmittelbar für die Herstellung der erfindungsgemäßen Mehrstoffmischungen verwendet werden können.

Zu diesem Zweck können ihnen in untergeordneten Mengen weiter Homo- oder Copolymerisate zugesetzt werden. Im Rahmen der vorliegenden Erfindung weist der Begriff "untergeordneten Mengen" darauf hin, daß nur solche Anteile verwendet werden sollen, welche das vorteilhafte Eigenschaftsprofil der erfindungsgemäß Stoffmischungen, das durch die in erfindungsgemäßer Verfahrensweise hergestellten (Co)Polymerisate hervorgerufen wird, nicht nachteilig verändern, sondern in vorteilhafter Weise variiert oder weiter verbessert wird.

Beispiele geeigneter Homo- oder Copolymerisate, welche den erfindungsgemäßen Stoffmischungen zugesetzt werden können, sind anderweitig hergestellte Polyacrylate, Polyester, Polyurethane, acrylierte Polyurethan, acrylierte Polyester, Polylactone, Polycarbonate, Polyether oder (Meth)Acrylatdiole.

Geeignete Polyacrylate werden beispielsweise unter der Marke Joncryl $^{R}$ verkauft, wie etwa Joncryl $^{R}$ SCX 912 und 922.5.

Geeignete Polyester- und/oder Alkydharzen werden z.B. in Ullmanns Encyklopädie der technischen Chemie, dritte Auflage, 14. Band, Urban & Schwarzenberg, München, Berlin 1863, Seiten 80 bis 89 und Seiten 99 bis 105, oder in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Beispiele für geeignete Polyurethanharze sind die in den Patentschriften EP-A-0 708 788, DE-A-44 01544 oder DE-A-195 34 361 beschriebenen Harze.

Außerdem können die erfindungsgemäßen Stoffgemische mit üblichen und bekannten organischen Lösemitteln verdünnt werden oder sie können in Wasser oder in wäßrigen Medien gelöst oder dispergiert werden.

Desweiteren werden den erfindungsgemäßen Stoffgemischen zum Zwecke der Herstellung der erfindungsgemäßen Mehrstoffmischungen weitere Bestandteile zugesetzt, welche nach dem Stand der Technik auf den Gebieten der Beschichtungsmittel, Klebstoffe und Dichtungsmassen üblich sind.

Hierbei ist es außerdem möglich, die erfindungsgemäßen Mehrstoffmischungen als Ein- oder auch als Mehrkomponentensysteme auszulegen. Derartige Systeme unterscheiden sich im wesentlichen durch die Art des eingesetzten Vernetzungsmittel. In beiden Fällen kommen alle Vernetzungsmittel in Betracht, welche mit den reaktiven Gruppen der Bindemittel, insbesondere der Hydroxylgruppen oder der Epoxidgruppen, unter den Härtungsbedingungen reagieren. Nur muß im Falle der Mehrkomponentensysteme das hierfür geeignete Vernetzungsmittel wegen seiner hohen Reaktivität bis kurz vor seiner Anwendung getrennt von den übrigen Bestandteilen gelagert werden.

Beispiele geeigneter Vernetzungsmittel sind Aminoplastharze, beta-Hydroxyalkylamide Siloxangruppen enthaltende Verbindungen oder Harze, Anhydridgruppen enthaltende Verbindungen oder Harze, Carboxylgruppen enthaltende Verbindungen oder Harze, blockierte und unblockierte Polyisocyanate oder Alkoxycarbonylaminotriazine, insbesondere aber blockierte Polyisocyanate oder Tris(alkoxycarbonylamino)triazine.

Sowohl in Ein- als auch Mehrkomponentensysteme können blockierte Polyisocyanate oder eine Mischung aus blockierten Polyisocyanaten zum Einsatz kommen.

Die einsetzbaren blockierten Polyisocyanate sind vorzugsweise so ausgebildet, daß sie sowohl mit einem Blockierungsmittel (Z1) als auch mit einem Blockierungsmittel (Z2) blockierte Isocyanatgruppen enthalten, wobei das Blockierungsmittel (Z1) ein Dialkylmalonat oder eine Mischung aus Dialkylmalonaten ist, das Blockierungsmittel (Z2) ein von (Z1) verschiedenes, aktive Methylengruppen enthaltendes Blockierungsmittel, ein Oxim oder eine Mischung aus diesen Blockierungsmitteln ist und das Äquivalentverhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Außerdem kommen Dimethylpyrazol und/oder substituierte Triazole als Blockierungsmittel in Betracht.

Ein Polyisocyanat oder eine Mischung aus Polyisocyanaten wird in an sich bekannter Art und Weise mit einer Mischung aus den Blockierungsmitteln (Z1) und (Z2) umgesetzt, wobei die Mischung aus den Blockierungsmitteln (Z1) und (Z2) die Blockierunqsmittel (Z1) und (Z2) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Das Polyisocyanat bzw. die Mischung aus Polyisocyanaten kann mit der Mischung aus den Blockierungsmitteln (Z1) und (Z2) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern.

Es wurde gefunden, daß auch dann Mehrstoffmischungen, insbesondere Beschichtungsmittel, Klebstoffe und Dichtungsmassen, mit guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (Z1) und (Z2) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6 oder hydroxylgruppenhaltige Homo- oder Copolymerisate eingesetzt.

Ein geeignetes blockiertes Polyisocyanat ist auch erhältlich, indem mit dem Blockierungsmittel (Z1) bzw. (Z2) blockierte Polyisocyanate in einem solchen Verhältnis gemischt werden, daß eine Mischung erhalten wird, in der das Äquivalent-Verhältnis zwischen den mit (Z1) blockierten Isocyanatgruppen und den mit (Z2) blockierten Isocyanatgruppen zwischen 1,0 : 1,0 und 9,0 : 1,0, vorzugsweise zwischen 8,0 : 2,0 und 6,0 : 4,0, besondere bevorzugt zwischen 7,5 : 2,5 und 6,5 : 3,5 liegt.

Prinzipiell können alle sogenannten Lackpolyisocyanate zur Herstellung der blockierten Polyisocyanate eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat, 1,3-Bis-(2-isocyanatopropyl-2-)benzol (TMXDI) und 1,4- und 1,3-Bis(isocyanatomethyl)cycloalkane wie 1,4- und 1,3-Bis(isocyanatomethyl)cycolhexan sowie Addukte dieser Polyisocyanate an Polyole, insbesondere niedermolekulare Polyole, wie z.B. Trimethylolpropan und von diesen Polyisocyanaten abgeleitete isocyanuratgruppen-und/oder biuretgruppenhaltige Polyisocyanate.

Als Polyisocyanate werden besonders bevorzugt Hexamethylendiisocyanat oder Isophorondiisocyanat, von diesen Diisocyanaten abgeleitete isocyanurat-, allophanat-, uretdion-, iminooxadiazindion- und/oder biuretgruppenhaltige Polyisocyanate, die vorzugsweise mehr als zwei Isocyanatgruppen im Molekül enthalten, sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Aquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blocklerungsmittel (Z1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylestar, wobei Malonsäurediethylester bevorzugt eingesetzt wird. Als Blockierungsmittel (Z2) werden von (Z1) verschiedene, aktive Methylengruppen enthaltende Blokkierungsmittel und Oxime sowie Mischungen aus diesen Blockierungsmitteln eingesetzt. Als Beispiele für Blockierungsmittel, die als Blockierungsmittel (Z2) einsetzbar sind, werden genannt: Acetessigsäuremethyl-, ethyl-, -propyl-, butyl-,-pentyl-, hexyl -, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (Z2) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (Z2) eingesetzt.

Als Vernetzer können auch Tris(alkoxycarbonylamino)triazine der Formel IV

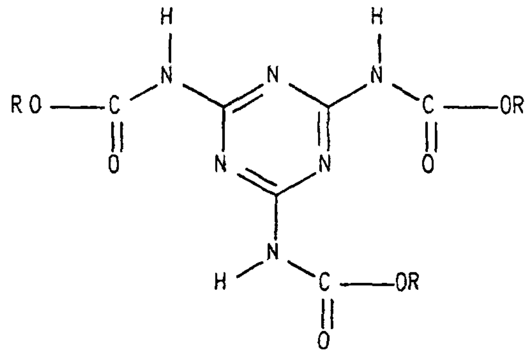

(IV)

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Ebenso sind Aminoplastharze, beispielsweise Melaminharze, verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP -B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Beispiele geeigneter beta-Hydroxyalkylamide sind N,N,N',N'-Tetrakis(2-hydroxyethyl)adipamid oder N,N,N',N'-Tetrakis(2-hydroxypropyl)adipamid.

Im Falle der Mehrkomponentensysteme, insbesondere der Zweikomponentensysteme, werden als Vernetzungsmittel mindestens ein gegebenfalls in einem oder mehreren organischen Lösungsmittel gelöstes nichtblockiertes Polyisocyanat verwendet. Zusätzlich kann aber auch mindestens eines der vorstehend beschriebenen blockierten Polyisocyanate mit verwendet werden.

Bei den nichtblockierten oder den teilblockierten Polyisocyanaten handelt es sich um beliebige organische Polyisocyanate, insbesondere Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPa.s (bei 23 Grad C) eingesetzt. Es können auch die teilblockierten Polyisocyanate gemäß der deutschen Patentschrift DE-A- 196 09 617 verwendet werden. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Polyisocyanates zu verbessern und gegebenenfalls die Viskosität des Polyisocyanats auf einen Wert innerhalb der obengenannten Bereiche abzusenken.

Geeignete Lösemittel für die Polyisocyanate sind beispielsweise Ethoxyethylpropionat, Butylacetat und ähnliches. Beispiele für geeignete Isocyanate werden in "Methoden der organischen Chemie", Houben-Weyl, Band 14/2,4. Auflage, Georg Thieme Verlag, Stuttgart, 1963, Seiten 61 bis 70, und von W. Siefken, Liebigs Annalen der Chemie, Band 562, Seiten 75 bis 136, beschrieben.

Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Uretdion-, Iminooxadiazindion-, Biuret-, Allophanat-, Urethan- und/oder Harnstoffgruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicydohexylmethan-4,4'-diisocyanat oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Desweiteren können die erfindungsgemäßen Mehrstoffmischungen UV-Absorber; Radikalfänger, Katalysatoren für die Vernetzung, insbesondere metallorganische Verbindungen, vorzugsweise Zinn und/oder wismutorganische Verbindungen oder tertiäre Amine; Rheologiemittel, insbesondere die aus den Patentschriften WO 94/22968, EP-A-0 276 501, EP-A-0 249 201 oder WO 97/12945 bekannten; Pigmente und Füllstoffe jeglicher Art, beispielsweise Farbpigmente wie Azopigmente, Phthalocyaninpigmente, Carbonylpigmente, Dioxazinpigmente, Titandioxid, Farbruß, Eisenoxide oder Chrom- bzw. Kobaltoxide, Effektpigmente wie Metallplättchenpigmente, insbesondere Aluminiumplättchenpigmente, und Perlglanzpigmente oder Füllstoffe wie Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasem, Cellulosefasern, Polyethylenfasem oder Holzmehl; Slipadditive; Polymerisationsinhibitoren; Entschäumer; Verlaufsmittel oder filmbildende Hilfsmittel, z.B. Cellulose-Derivate; oder andere in Beschichtungsmitteln, Klebstoffen oder Dichtungsmassen üblicherweise eingesetzten Additive enthalten.

Diese Additive werden üblicherweise in einer Menge von bis zu 15 Gew.-%, bevorzugt 2 bis 9 Gew.-%, bezogen auf das Gewicht der jeweiligen erfindungsgemäßen Mehrstoffmischung ohne Pigmente und ohne Füllstoffe, verwendet.

Die Herstellung der erfindungsgemäßen Mehrstoffmischungen weist keine verfahrenstechnischen Besonderheiten auf, sondern es werden die üblichen Methoden wie das Zusammengeben der einzelnen Bestandteile und ihr Vermischen unter Rühren angewandt. Die Herstellung der aus zwei oder mehr Komponenten bestehenden erfindungsgemäßen Mehrstoffmischungen erfolgt ebenfalls mittels Rühren bzw. Dispersion unter Verwendung der üblicherweise eingesetzten Vorrichtungen, beispielsweise mittels Dissolver oder mittels üblicher Zwei- oder Mehrkomponenten-Dosier- und -Mischanlagen. Die einzelnen Komponenten werden bis zu ihrer bestimmungsgemäßen Verwendung getrennt gelagert.

Die erfindungsgemäßen Mehrstoffmischungen werden insbesondere als Beschichtungsmittel, Klebstoffe und Dichtungsmassen verwendet

Das erfindungsgemäßen Beschichtungsmittel wird vor allem zur Herstellung von Folien, beschichteten Formteilen, Verbundteilen oder komplexen Bauteilen, insbesondere Fahrzeugkarosserien, welche Folien, Glas, Holz, Papier und/oder Metall enthalten oder hieraus bestehen, durch Auftragen des Beschichtungsmittels auf den entsprechenden Formteilen, Verbundteilen oder komplexen Bauteilen und Aushärten der resultierenden Beschichtung verwendet.

Das erfindungsgemäße Beschichtungsmittel wird vorzugsweise zur Herstellung von Ein- oder Mehrschichtlackierungen und besonders bevorzugt zur Herstellung von Decklacken eingesetzt. Es kann aber auch zur Herstellung eines über einer Basislackschicht zu applizierenden Klarlacks, beispielsweise eines Klarlacks einer nach dem naß-in-naß-Verfahren hergestellten Mehrschichtlackierung, bestimmt sein. Darüber hinaus kann es auch als Grundierung, Füller oder Unterbodenschutz verwendet werden. Selbstverständlich können die Kunststoffe oder die anderen Substrate auch direkt mit dem Klarlack oder dem Decklack beschichtet werden.

Die erfindungsgemäßen Beschichtungsmittel können sowohl bei der Serien- als auch bei der Reparaturlakkierung von Fahrzeugkarosserien, insbesondere Automobilkarosserien inklusive Kunststoffanbauteile, eingesetzt werden.

Der erfindungsgemäße Klebstoff dient zur Herstellung von verklebten Verbundteilen, welche Folien, Kunststoffe, Glas, Holz, Papier und/oder Metall enthalten oder hieraus bestehen, indem der Klebstoff auf der ohne den zu verklebenden Oberfläche(n) einer Folie oder eines Kunststoff, Glas, Holz, Papier und/oder Metall enthaltenden oder heraus bestehenden Formteils und/oder der oder den Oberfläche(n) des Teils, der hiermit verklebt werden soll, aufgetragen und gegebenenfalls vorgehärtet wird, wonach die betreffenden zu verklebenden Oberflächen in Kontakt gebracht werden und hiernach der Klebstoff ausgehärtet wird.

Die Applikation des erfindungsgemäßen Beschichtungsmittels und des erfindungsgemäßen Klebstoffs erfolgt im allgemeinen mit Hilfe üblicher Methoden, beispielsweise durch Spritzen, Rakeln, Tauchen, Streichen oder Coil Coating.

Die erfindungsgemäße Dichtungsmasse dient der hermetischen Abdichtung der Fugen in Verbundteilen und komplexen Bauteilen, insbesondere Fahrzeugkarosserien, welche aus unterschiedlichen Formteilen und Verbundteilen zusammengesetzt sind. Zu diesem Zweck wird die erfindungsgemäße Dichtungsmasse in die Fugen eingebracht, etwa durch Spritzen oder Gießen, und gegebenenfalls mit den ebenfalls verwendeten Beschichtungsmitteln und/oder Klebstoffen thermisch gehärtet.

Die erfindungsgemäßen Beschichtungsmittel, Klebstoffe oder Dichtungsmassen werden vorzugsweise bei Temperaturen von Raumtemperatur bis zu 240 °C gehärtet. Besonders bevorzugt sind Temperaturen zwischen 60 und 180 °C. In speziellen Anwendungsformen der erfindungsgemäßen Beschichtungsmittel können auch tiefere Härtungstemperaturen von 60 bis 160 °C angewendet werden.

Formteile, Verbundteile und komplexe Bauteile, welche Folien, Kunststoffe, Glas, Holz, Papier und/oder Metall enthalten oder hieraus bestehen und mindestens eine Schicht des ausgehärteten Bindemittels, mindestens eine Schicht des ausgehärteten Klebstoffs und/oder mindestens eine mit einer ausgehärteten erfindungsgemäßen Dichtungsmasse abgedichtete Fuge enthalten, weisen gegenüber herkömmlichen Form-, Verbund- und Bauteilen hinsichtlich der Thermostabilität, Lichtbeständigkeit, Kratzfestigkeit und Wetterbeständigkeit deutliche Vorteile auf, so daß insgesamt einer längeren Lebensdauer resultiert.

**Beispiele**

**Beispiel 1**

**Herstellung eines erfindungsgemäßen Stoffgemischs**

In einem für die Polymerisation geeigneten 41 Stahlreaktor mit Rückflußkühler und zwei Dosiergefäßen wurden 935 g 2,4-Diethyloctandiol-1,5 vorgelegt und auf 165 °C erhitzt. Zu dieser Vorlage wurde eine Mischung aus 225 g Butylacrylat, 225 g Styrol und 258 g Hydroxyethylmethacrylat sowie 57 g Di-tert.-Butylperoxid im Verlauf von drei Stunden gleichmäßig zugegeben. Anschließend wurde der Ansatz während drei Stunden bei 165 °C gerührt. Es resultierte ein erfindungsgemäßes Stoffgemisch mit einer Viskosität von 155,2 dPas. Das erfindungsgemäße Stoffgemisch war hervorragend für die Herstellung von Beschichtungsmitteln, Dichtungsmassen und Klebstoffen geeignet.

**Beispiel 2**

**Herstellung eines erfindungsgemäßen Stoffgemischs**

In dem vorstehend beschriebenen Stahlreaktor wurden 586,3 g 2,4-Diethyloctandiol-1,5 auf 150 °C erhitzt. Zu dieser Vorlage wurde eine Mischung aus 390,6 g Styrol, 254,6 g Methylmethacrylat, 339,4 g tert.-Butylcyclohexylacrylat, 101,8 g Butylmethacrylat und 611 g Hydroxypropylmethacrylat innerhalb von vier Stunden zudosiert. Mit 15minütigem Vorlauf vor diesem Zulauf erfolgte die Zudosierung einer Mischung aus 170,7 g Xylol und 41,1 g Di-tert.-butylperoxid innerhalb von vier Stunden und 45 Minuten. Danach wurde während zwei Stunden nachpolymerisiert, und das resultierende erfindungsgemäße Stoffgemisch wurde mit 155,3 g Butylacetat verdünnt. Das verdünnte erfindungsgemäße Stoffgemisch wies eine Viskosität von 1,3 dPas auf und war hervorragend für die Herstellung von Beschichtungsmitteln geeignet.

**Beispiel 3**

**Herstellung eines erfindungsgemäßen Stoffgemischs**

In dem vorstehend beschriebenen Stahlreaktor wurden 597 g eines hydroformylierten und anschließend hydrierten Oligomeren (oligomeres Polyol) als hydroxylgruppenhaltiger Reaktivverdünner vorgelegt und auf 130 °C erhitzt.
Das hydroformylierte und hydrierte Oligomere selbst war hergestellt worden durch Metathese von acyclischen Monoolefinen und cyclischen Monoolefinen, Hydroformylierung der resultierenden Oligomeren und anschließender Hydrierung, wobei als cyclisches Monoolefin Cyclopenten und als acyclische Monoolefine Kohlenwasserstoffgemische, die in der Erdölverarbeitung durch Cracken erhalten werden ($C_5$-Schnitt), verwendet worden waren. Das resultierende oligomere Polyol wies eine OH-Zahl von 350, eine Viskosität von 27,2 dPas bei 23° [Platte-Kegel-Viskosimeter], ein zahlenmittleres Molekulargewicht $M_n$ von 561 und ein massenmittleres Molekulargewicht $M_w$ von 1068 auf.
Zu dieser Vorlage wurde eine Mischung aus 120 g Styrol, 115,6 g Methylmethacrylat, 63,8 g Methacrylester 13 (13-MA der Firma Röhm), 144 g Butylmethacrylat und 136,4 g Hydroxyethylmethacrylat innerhalb von vier Stunden zudosiert (Monomerzulauf I). Mit fünfminütigem Vorlauf vor diesem Zulauf wurde eine Mischung aus 90,4 g des vorstehend beschriebenen oligomeren Polyols und 55,4 g tert.-Butylperoxy-2-ethylhexanoat während vier Stunden und 30 Minuten zudosiert. Nach zwei Stunden und 30 Minuten des Monomerzulaufs I wurde eine Mischung aus 57,2 g Hydroxyethylacrylat, 27,5 g Acrylsäure und 19,7 g des vorstehend beschriebenen oligomeren Polyols zudosiert (Monomerzulauf II). Die Reaktionsmischung wurde während zwei Stunden bei 130 °C nachpolymerisiert.
Das resultierende erfindungsgemäße Stoffgemisch war hervorragend für die Herstellung von Beschichtungsmitteln von Dichtungsmassen geeignet.

## Patentansprüche

**1.** Homo- oder Copolymerisate olefinisch ungesättigter Verbindungen, herstellbar indem man die Verbindungen in Reaktiwerdünnem für thermisch härtbare Mehrstoffmischungen als Reaktionsmedium (co)polymerisiert, wobei als Reaktiwerdünner Polyole und/oder Epoxide verwendet werden, **dadurch gekennzeichnet, daß**

- als Polyole (i) eine hyperverzweigte Verbindung, erhältlich durch Umsetzung von 2,2-Bis-hydroxymethyl-butandiol-1,4 mit Phthalsäureanhydrid und anschließender Umsetzung des resultierenden Zwischenprodukts mit Glycidylestem von tertiären, stark verzweigten, gesättigten Monocarbonsäuren,
- als Polyole (ii) Dialkyloctandiole, insbesondere Diethyloctandiole und
- als Polyole (iii) hydroformylierte und hydrierte Oligomere, erhältlich durch Metathese von acyclischen Monoolefinen und cyclischen Monoolefinen, Hydroformylierung der resultierenden Oligomeren und anschließender Hydrierung, wobei als cyclisches Monoolefin Cyclopenten und als acyclische Monoolefine Kohlenwasserstoffgemische, die in der Erdölverarbeitung durch Cracken erhalten werden ($C_5$-Schnitt), verwendet werden und wobei die Polyole (iii) eine Hydroxylzahl (OHZ) von 200 bis 650, ein zahlenmittleres Molekulargewicht $M_n$ von 400 bis 1.000 ein massenmittleres Molekulargewicht $M_w$ im Bereich von 600 bis 2.000 und eine Uneinheitlichkeit $M_n/M_w$ von 1,4 bis 3 aufweisen;

verwendet werden und daß als epoxidgruppenhaltige Reaktivverdünner

(iv) Glycidylether von Polyolen oder Polyphenolen wie Glycerin, Diglycerin, Glucitol, Erythritol, Pentaerythrit, Dipentaerythrit, Trimethylolpropan, Trimethylolethan, Ditrimethylolpropan, Ditrimethylolethan, Tetrakis(2-hydroxyethyl)ethan, Tetrakis(3-hydroxypropyl)methan, die Tetrole II1 bis II10:

$$HO\text{-}(\text{-}CH_2\text{-})_2\text{-}C(\text{-}CH_2\text{-}OH)_3, \quad (II1)$$

$$HO\text{-}(\text{-}CH_2\text{-})_3\text{-}C(\text{-}CH_2\text{-}OH)_3, \quad (II2)$$

$$HO\text{-}(\text{-}CH_2\text{-})_4\text{-}C(\text{-}CH_2\text{-}OH)_3, \quad (II3)$$

$$HO\text{-}(\text{-}CH_2\text{-})_5\text{-}C(\text{-}CH_2\text{-}OH)_3, \quad (II4)$$

$$[HO\text{-}(\text{-}CH_2\text{-})_2\text{-}]_2C(CH_2\text{-}OH)_2, \quad (II5)$$

$$[HO\text{-}(\text{-}CH_2\text{-})_2\text{-}]_3C\text{-}CH_2\text{-}OH, \quad (II6)$$

$$HO\text{-}(\text{-}CH_2\text{-})_3\text{-}C[\text{-}(\text{-}CH_2\text{-})_2\text{-}OH]_3, \quad (II7)$$

$$HO\text{-}(\text{-}CH_2\text{-})_3\text{-}C[\text{-}(\text{-}CH_2\text{-})_2\text{-}OH]_2(\text{-}CH_2\text{-}OH), \quad (II8)$$

$$HO\text{-}(\text{-}CH_2\text{-})_4\text{-}C(\text{-}CH_2\text{-}OH)\ [\text{-}(\text{-}CH_2\text{-})_2\text{-}OH]\ [\text{-}(\text{-}CH_2\text{-})_3\text{-}OH] \quad (II9)$$

oder

$$HO\text{-}(\text{-}CH_2\text{-})_5\text{-}C\ (\text{-}CH_2\text{-}OH)\ [\text{-}(\text{-}CH_2\text{-})_4\text{-}OH]\ 2 \quad (II10);$$

die Polyole (i), (ii) und (iii), Brenzcatechin, Resorcinol, Hydrochinon, Pyrogallol, Phloroglucin, (p-Hydroxyphenyl)-phloroglucin, 5-(7-Hydroxynaphth-1-yl)-pyrogallol, Bisphenol F, Bisphenol A oder Novolake;

(vi) Glycidylester von Versaticsäure$^{R}$;

(vii) Epoxidharzester von gesättigten und ungesättigten Fettsäuren (epoxidierte Öle); und/oder

(viii) epoxidierte Triglyceride natürlicher Öle und Ester

verwendet werden.

**2.** Homo- oder Copolymerisate nach Anspruch 1, **dadurch gekennzeichnet, daß** sie durch Homo- oder Copolymerisation olefinisch ungesättigter Monomerer in einem Taylorreaktor mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert, herstellbar sind.

**3.** Verfahren zur Herstellung von Homo- oder Copolymerisaten olefinisch ungesättigter Verbindungen durch radikalische (Co)Polymerisation in einem/bei Rammtemperatur flüssigen Reaktionsmedium, **dadurch gekennzeichnet, daß** man als Reaktionsmedium Reaktivverdünner für thermisch härtbare Mehrstoffmischungen verwendet, wobei ein Teil der Reaktivverdünner nach der (Co)Polymerisation mit olefinisch ungesättigten Verbindungen modifiziert wird.

**4.** Verfahren nach Anspruch 3, **dadurch gekennzeichnet, daß** es in einem Taylorreaktor mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert, durchgeführt wird.

**5.** Verwendung der Homo- oder Copolymerisate gemäß einem der Ansprüche 1 oder 2 oder der gemäß einem der Ansprüche 3 oder 4 hergestellten Homooder Copolymerisate für die Herstellung thermisch härtbarer oder thermisch und mit aktinischem Licht und/oder Elektronenstrahlen härtbarer Beschichtungsmittel, Klebstoffe oder Dichtungsmassen.

## Claims

**1.** Homopolymers or copolymers of olefinically unsaturated compounds, preparable by (co)polymerizing the compounds in reactive diluents for thermally curable multisubstance mixtures as reaction medium, polyols and/or epoxides being used as reactive diluents, **characterized in that**

- the polyols (I) used comprise a hyperbranched compound obtainable by reacting 2,2-bishydroxymethylbutane-1,4-diol with phthalic anhydride and then reacting the resultant intermediate with glycidyl esters of tertiary, highly branched, saturated monocarboxylic acids,

- the polyols (ii) used comprise dialkyloctanediols, especially diethyl-octanediols, and

- the polyols (iii) used comprise hydroformylated and hydrogenated oligomers, obtainable by metathesis from acyclic monoolefins and cyclic monoolefins, hydroformylation of the resultant oligomers and subsequent hydrogenation, the cyclic monoolefin used comprising cyclopentene and the acyclic monoolefins used comprising hydrocarbon mixtures obtained in petroleum processing by cracking ($C_5$ cut), and the polyols (iii) having a hydroxyl number (OHN) of from 200 to 650, a number-average molecular weight $M_n$ of from 400 to 1 000, a mass-average molecular weight $M_w$ in the range from 600 to 2 000, and a polydispersity $M_n/M_w$ from 1.4 to

3; and **in that** the reactive diluents containing epoxide groups comprise

(iv) glycidyl ethers of polyols or polyphenols such as glycerol, diglycerol, glucitol, erythritol, pentaerythritol, dipentaerythritol, trimethylolpropane, trimethylolethane, ditrimethylolpropane, ditrimethylolethane, tetrakis (2-hydroxyethyl)ethane, tetrakis(3-hydroxypropyl)methane, the tetraols II1 to II10:

$$HO\text{-}(\text{-}CH_2\text{-})_2\text{-}C(\text{-}CH_2\text{-}OH)_3, \quad (II1)$$

$$HO\text{-}(\text{-}CH_2\text{-})_3\text{-}C(\text{-}CH_2\text{-}OH)_3\ , \quad (II2)$$

$$HO\text{-}(\text{-}CH_2\text{-})_4\text{-}C(\text{-}CH_2\text{-}OH)_3\ , \quad (II3)$$

$$HO\text{-}(\text{-}CH_2\text{-})_5\text{-}C(\text{-}CH_2\text{-}OH\ )_3, \quad (II4)$$

$$[HO\text{-}(\text{-}CH_2\text{-})_2\text{-}]_2C(CH_2\text{-}OH)_2, \quad (II5)$$

$$[HO\text{-}(\text{-}CH_2\text{-})_2\text{-}]_3C\text{-}CH_2\text{-}OH, \quad (II6)$$

$$HO\text{-}(\text{-}CH_2\text{-})_3\ \text{-}C(\text{-}\ (\text{-}CH_2\text{-})_2\text{-}OH)]_3\ , \quad (II7)$$

$$HO\text{-}(\text{-}CH_2\text{-})_3\text{-}C[\text{-}(\text{-}CH_2\text{-})_2\text{-}OH]_2(\text{-}CH_2\text{-}OH)\ , \quad (II8)$$

$$HO\text{-}(\text{-}CH_2\text{-})_4\text{-}C(\text{-}CH_2\text{-}OH)[\text{-}(\text{-}CH_2\text{-})_2\text{-}OH][\text{-}(\text{-}CH_2\text{-})_3\text{-}OH] \quad (II9)$$

or

$$HO\text{-}(\text{-}CH_2\text{-})_5\text{-}C(\text{-}CH_2\text{-}OH)[\text{-}(\text{-}CH_2\text{-})_4\text{-}OH]2 \quad (II10);$$

the polyols (i), (ii) and (iii), pyrocatechol, resorcinol, hydroquinone, pyrogallol, phloroglucinol, (p-hydroxyphenyl)phloroglucinol, 5-(7-hydroxynaphth-1-yl)pyrogallol, bisphenol F, bisphenol A or novolaks;

(vi) glycidyl esters of Versatic® acid;

(vii) epoxy resin esters of saturated and unsaturated fatty acids (epoxidized oils); and/or

(viii) epoxidized triglycerides of natural oils and esters.

**2.** Homopolymers or copolymers according to Claim 1, **characterized in that** they are preparable by homopolymerization or copolymerization of olefinically unsaturated monomers in a Taylor reactor having an external reactor wall located within which there is a concentrically or eccentrically disposed rotor, a reactor floor and a reactor lid, which together define the annular reactor volume, at least one means for metered addition of reactants, and a means for the discharge of product, where the reactor wall and/or the rotor are or is geometrically designed in such a way that the conditions for Taylor vortex flow are met over substantially the entire reactor length in the reactor volume, i.e. in such a way that the annular gap broadens in the direction of flow traversal.

**3.** Process for preparing homopolymers or copolymers of olefinically unsaturated compounds by free-radical (co) polymerization in a reaction medium which is liquid at room temperature, **characterized in that** reactive diluents

for thermally curable multisubstance mixtures are used as the reaction medium, a fraction of the reactive diluents being modified after the (co)polymerization with olefinically unsaturated compounds.

**4.** Process according to Claim 3, **characterized in that** it is conducted in a Taylor reactor having an external reactor wall located within which there is a concentrically or eccentrically disposed rotor, a reactor floor and a reactor lid, which together define the annular reactor volume, at least one means for metered addition of reactants, and a means for the discharge of product, where the reactor wall and/or the rotor are or is geometrically designed in such a way that the conditions for Taylor vortex flow are met over substantially the entire reactor length in the reactor volume, i.e. in such a way that the annular gap broadens in the direction of flow traversal.

**5.** Use of the homopolymers or copolymers according to either of Claims 1 and 2 or of the homopolymers or copolymers prepared according to either of Claims 3 and 4 to prepare coating compositions, adhesives or sealing compounds curable thermally or curable thermally and with actinic light and/or electron beams.

## Revendications

**1.** Homopolymères ou copolymères de composés oléfiniquement insaturés, pouvant être préparés en ce qu'on (co) polymérise les composés dans des diluants réactifs pour mélanges de plusieurs substances, thermodurcissables comme milieu réactionnel, en utilisant comme diluants réactifs des polyols et/ou des époxydes, **caractérisés en ce qu'**on utilise

- comme polyols (i) un composé hyperramifié, pouvant être obtenu par la transformation de 2,2-bis-hydroxyméthylbutanediol-1,4 avec de l'anhydride de l'acide phtalique et transformation consécutive du produit intermédiaire obtenu avec des esters glycidyliques d'acides monocarboxyliques saturés tertiaires, fortement ramifiés,
- comme polyols (ii) des dialkyloctanediols, en particulier des diéthyloctanediols et
- comme polyols (iii) des oligomères hydroformylés et hydrogénés, pouvant être obtenus par métathèse de monooléfines acycliques et de monooléfines cycliques, hydroformylation des oligomères obtenus et hydrogénation consécutive, en utilisant comme monooléfine cyclique du cyclopentène et comme monooléfines acycliques des mélanges d'hydrocarbures qui sont obtenus lors du traitement du pétrole par craquage (fraction $C_5$) et les polyols (iii) présentant un indice hydroxyle (IOH) de 200 à 650, un poids moléculaire numérique moyen Mn de 400 à 1000, un poids moléculaire moyen en masse Mw dans la plage de 600 à 2000 et/ou une non-uniformité Mn/Mw de 1,4 à 3 ; et **en ce qu'**on utilise comme diluants réactifs contenant des groupes époxyde

(iv) des glycidyléthers de polyols ou de polyphénols tels que le glycérol, le diglycérol, le glucitol, l'érythritol, le pentaérythritol, le dipentaérythritol, le triméthylolpropane, le triméthyloléthane, le ditriméthylolpropane, le ditriméthyloléthane, le tétrakis(2-hydroxyéthyl)éthane, le tétrakis(3-hydroxypropyl)méthane, les tétaols II1 à II10 :

$$HO\text{-}(\text{-}CH_2\text{-})_2\text{-}C(\text{-}CH_2\text{-}OH)_3, \quad (II1)$$

$$HO\text{-}(\text{-}CH_2\text{-})_3\text{-}C(\text{-}CH_2\text{-}OH)_3, \quad (II2)$$

$$HO\text{-}(\text{-}CH_2\text{-})_4\text{-}C(\text{-}CH_2\text{-}OH)_3, \quad (II3)$$

$$HO\text{-}(\text{-}CH_2\text{-})_5\text{-}C(\text{-}CH_2\text{-}OH)_3, \quad (II4)$$

$$[HO\text{-}(\text{-}CH_2\text{-})_2\text{-}]_2C(CH_2\text{-}OH)_2, \quad (II5)$$

$$[HO\text{-}(\text{-}CH_2\text{-})_2\text{-}]_3C\text{-}CH_2\text{-}OH, \quad (II6)$$

$$HO\text{-}(\text{-}CH_2\text{-})_3\text{-}C[\text{-}(\text{-}CH_2\text{-})_2\text{-}OH]_3, \quad (II7)$$

$$HO\text{-}(\text{-}CH_2\text{-})_3\text{-}C[\text{-}(\text{-}CH_2\text{-})_2\text{-}OH]_2(\text{-}CH_2\text{-}OH), \quad (II8)$$

$$HO\text{-}\ (\text{-}CH_2\text{-})_4\text{-}C\ (\text{-}CH_2\text{-}OH)\ [\text{-}(\text{-}CH_2\text{-})_2\text{-}OH]\ [\text{-}(\text{-}CH_2\text{-})_3\text{-}OH] \quad (II9)$$

ou

$$HO\text{-}(\text{-}CH_2\text{-})_5\text{-}C(\text{-}CH_2\text{-}OH)[\text{-}(\text{-}CH_2\text{-})_q\text{-}OH]_2 \quad (II10);$$

les polyols (i), (ii) et (iii), la pyrocatéchine, le résorcinol, l'hydroquinone, le pyrogallol, la phloroglucine, la (p-hydroxyphényl)phloroglucine, le 5-(7-hydroxynapht-1-yl)pyrogallol, le bisphénol F, le bisphénol A ou des novolaques ;
(vi) des esters glycidyliques de l'acide versatique$^R$ ;
(vii) des esters de résine époxyde d'acides gras saturés et insaturés (huiles époxydées) ; et/ou
(viii) des triglycérides époxydés d'huiles et d'esters naturels.

2. Homopolymères et copolymères selon la revendication 1, **caractérisés en ce qu'**ils peuvent être préparés par homopolymérisation ou copolymérisation de monomères oléfiniquement insaturés dans un réacteur de Taylor avec une paroi extérieure de réacteur et un rotor situé dans celui-ci, disposé concentriquement ou excentriquement, un fond de réacteur et un couvercle de réacteur qui définissent ensemble le volume de réacteur en forme de fente annulaire, au moins un dispositif pour le dosage des produits de départ ainsi qu'un dispositif pour l'évacuation des produits, la paroi du réacteur et/ou le rotor ayant une forme géométrique telle que sur essentiellement toute la longueur du réacteur, dans le volume du réacteur, les conditions pour un écoulement de Taylor sont remplies, c'est-à-dire que la fente annulaire s'élargit dans le sens de l'écoulement.

3. Procédé pour la préparation d'homopolymères ou de copolymères de composés oléfiniquement insaturés par (co) polymérisation radicalaire dans un milieu réactionnel liquide à température ambiante, **caractérisé en ce qu'**on utilise comme milieu réactionnel des diluants réactifs pour mélanges de plusieurs substances thermodurcissables, une partie du diluant réactif étant modifiée après la (co)polymérisation avec les composés oléfiniquement insaturés.

4. Procédé selon la revendication 3, **caractérisé en ce qu'**il est réalisé dans un réacteur de Taylor avec une paroi extérieure de réacteur et un rotor situé dans celui-ci, disposé concentriquement ou excentriquement, un fond de réacteur et un couvercle de réacteur qui définissent ensemble le volume de réacteur en forme de fente annulaire, au moins un dispositif pour le dosage de produits de départ ainsi qu'un dispositif pour l'évacuation des produits, la paroi du réacteur et/ou le rotor ayant une forme géométrique telle que sur essentiellement toute la longueur du réacteur, dans le volume du réacteur, les conditions pour un écoulement de Taylor sont remplies, c'est-à-dire que la fente annulaire s'élargit dans le sens de l'écoulement.

5. Utilisation des homopolymères et copolymères selon l'une quelconque des revendications 1 ou 2 ou des homopolymères ou copolymères préparés selon l'une quelconque des revendications 3 ou 4 pour la préparation d'agents de revêtement, d'adhésifs ou de masses d'étanchéité thermodurcissables ou durcissables thermiquement et avec une lumière actinique et/ou des rayons électroniques.